# EUROPEAN PATENT APPLICATION

(11) **EP 2 525 469 A2**
(43) Date of publication of application: **21.11.2012**
(21) Application number: 11007673.4
(22) Date of filing: 21.09.2011
(51) Int. Cl.: H02J 7/02

(54) **Mobile terminal and controlling method thereof**

(30) Priority: 17.05.2011 KR 20110046177
(71) Applicant: LG ELECTRONICS INC., Yeongdeungpo-gu Seoul 150-721 (KR)
(72) Inventor: Kim, Jonghwan, Seoul 153-801 (KR)
(74) Representative: Beyer, Andreas

(57) **Abstract**

A mobile terminal and controlling method thereof are disclosed, by which a preset function is executed at a location of the mobile terminal in case that the mobile terminal initiates a battery charging using a wireless charging power generated from an external wireless charging medium. The present invention includes initiating a charging of a battery of a terminal by receiving a wireless charging power generated from an external wireless charging medium, if the charging of the battery is initiated, obtaining a current location of the terminal, searching a memory of the terminal for a function preset to the obtained location of the terminal, and controlling an operation of the found function.

## Description

This application claims the benefit of earlier filing date and right of priority to Korean Application No.10-2011-0046177, filed on May 17, 2011, the contents of which are hereby incorporated by reference herein in their entirety.

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for facilitating a user to use a terminal in further consideration of user's convenience.

### Discussion of the Related Art

A mobile terminal is a device which may be configured to perform various functions. Examples of such functions include data and voice communications, capturing images and video via a camera, recording audio, playing music files and outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

Generally, terminals can be classified into mobile terminals and stationary terminals according to a presence or non-presence of mobility. And, the mobile terminals can be further classified into handheld terminals and vehicle mount terminals according to availability for hand-carry.

There are ongoing efforts to support and increase the functionality of mobile terminals. Such efforts include software and hardware improvements, as well as changes and improvements in the structural components which form the mobile terminal.

A battery of the above-described mobile terminal needs to be charged.

A method of charging the battery can be classified into a wire charge and a wireless charge. Although the wireless charging method is generalized, wireless charging media are being developed using magnetic induction or magnetic resonance.

### SUMMARY OF THE INVENTION

Accordingly, the present invention is directed to a mobile terminal and controlling method thereof that substantially obviate one or more problems due to limitations and disadvantages of the related art.

An object of the present invention is to provide a mobile terminal and controlling method thereof, by which a preset function is executed at a location of the mobile terminal in case that the mobile terminal initiates a battery charging using a wireless charging power generated from an external wireless charging medium.

Another object of the present invention is to provide a mobile terminal and controlling method thereof, by which a preset function is executed in a preset time zone in case that the mobile terminal initiates a wireless battery charging.

A further object of the present invention is to provide a mobile terminal and controlling method thereof, by which charging efficiency information on wireless charging media included in a current area of the mobile terminal can be provided in case that a command for a wireless charging initiation of a battery of the mobile terminal or a search command for wireless charging media situated within the current area is inputted.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to the present invention includes a battery, a display unit configured to display information, a wireless communication unit configured to a wireless communication, a position location unit configured to recognize a location of a terminal, a memory having at least one function mapped to at least one location of the terminal, a charging unit configured to charge the battery by receiving a wireless charging power generated from an external wireless charging medium;, a controller configured to control an operation relating to wireless charging of the battery, characterized in that wherein the controller configured to recognize a current location of the terminal via the position location unit when a wireless charging of the battery is initiated via the wireless charging medium, to search the memory for a function mapped to the recognized location of the terminal, and to control an operation relating to the searched function.

In another aspect of the present invention, a method of controlling a mobile terminal according to the present invention includes the steps of receiving a wireless charging power from an external wireless charging medium, initiating a wireless charging of a battery of the mobile terminal using the received wireless charging power, recognizing a current location of the mobile terminal when the wireless charging of the battery is initiated, searching a memory of the terminal for a function preset to the recognized location of the mobile terminal, and controlling an operation relating to the searched function.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The above and other aspects, features, and advantages of the present invention will become more apparent upon consideration of the following description of preferred embodiments, taken in conjunction with the accompanying drawing figures. In the drawings:
- FIG. 1: is a diagram of a wireless charging system according to the present invention;
- FIG. 2: is a perspective diagram of a wireless charging system including a wireless charging pad of magnetic induction and a mobile terminal according to the present invention;
- FIG. 3: is a diagram for a structure of a wireless charging pad according to the present invention;
- FIG. 4: is a block diagram of a wireless charging pad according to the present invention;
- FIG. 5: is a diagram of a wireless charging system including a wireless charging power transmitting device of magnetic resonance and a mobile terminal according to the present invention;
- FIG. 6: is a block diagram of a wireless charging power transmitting device according to the present invention;
- FIG. 7: is a block diagram of a mobile terminal according to the present invention;
- FIG. 8: is a flowchart of a process for setting a function to be executed per location of a mobile terminal in case of a wireless charging of the mobile terminal according to a first embodiment of the present invention;
- FIG. 9: is a diagram of screen configuration of a process for setting a function to be executed per location of a mobile terminal in case of a wireless charging of the mobile terminal according to a first embodiment of the present invention;
- FIG. 10: is a flowchart of a process for setting a function to be executed per time zone in case of a wireless charging of a mobile terminal according to a first embodiment of the present invention;
- FIG. 11: is a diagram of screen configuration of a process for setting a function to be executed per time zone in case of a wireless charging of a mobile terminal according to a first embodiment of the present invention;
- FIG. 12: is a flowchart of a process for controlling an operation of a function set for a current location of a mobile terminal and/or a current time zone in case of a wireless charging of the mobile terminal according to a first embodiment of the present invention;
- FIG. 13 and FIG. 14: are diagrams of screen configuration of a process for controlling an operation of a function set for a current location of a mobile terminal and/or a current time zone in case of a wireless charging of the mobile terminal according to an embodiment 1-1 of the present invention;
- FIG. 15 and FIG. 16: are diagrams of screen configuration of a process for controlling an operation of a function set for a current location of a mobile terminal and/or a current time zone in case of a wireless charging of the mobile terminal according to an embodiment 1-2 of the present invention;
- FIG. 17 and FIG. 18: are diagrams of screen configuration of a process for controlling an operation of a function set for a current location of a mobile terminal and/or a current time zone in case of a wireless charging of the mobile terminal according to an embodiment 1-3 of the present invention;
- FIGs. 19 to 22: are diagrams of screen configuration of a process for controlling an operation of a function set for a current location of a mobile terminal and/or a current time zone in case of a wireless charging of the mobile terminal according to an embodiment 1-4 of the present invention;
- FIG. 23: is a diagram of screen configuration of a process for controlling an operation of a function set for a current location of a mobile terminal and/or a current time zone in case of a wireless charging of the mobile terminal according to an embodiment 1-5 of the present invention;
- FIG. 24: is a diagram of screen configuration of a process for controlling an operation of a function set for a current location of a mobile terminal and/or a current time zone in case of a wireless charging of the mobile terminal according to an embodiment 1-6 of the present invention;
- FIG. 25: is a diagram of screen configuration of a process for controlling an operation of a function set for a current location of a mobile terminal and/or a current time zone in case of a wireless charging of the mobile terminal according to an embodiment 1-7 of the present invention;
- FIG. 26: is a diagram of screen configuration of a process for controlling an operation of a function set for a current location of a mobile terminal and/or a current time zone in case of a wireless charging of the mobile terminal according to an embodiment 1-8 of the present invention;
- FIG. 27: is a diagram of screen configuration of a process for controlling an operation of a function set for a current location of a mobile terminal and/or a current time zone in case of a wireless charging of the mobile terminal according to an embodiment 1-9 of the present invention;
- FIG. 28 and FIG. 29: are diagrams of screen configuration of a process for controlling an operation of a function set for a current location of a mobile terminal and/or a current time zone in case of a wireless charging of the mobile terminal according to an embodiment 1-10 of the present invention;
- FIG. 30: is a diagram of screen configuration of a process for controlling an operation of a function set for a current location of a mobile terminal and/or a current time zone in case of a wireless charging of the mobile terminal according to an embodiment 1-11 of the present invention; and
- FIG. 31: is a flowchart of a process for providing charging efficiency information on wireless charging media within a current area in case of a wireless charging of a mobile terminal according to a second embodiment of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes "module" and "unit" are used for facilitation of the detailed description of the present invention and do not have meanings or functions different from each other. Therefore, significant meanings or roles are not given to the suffixes themselves and it is understood that the 'module', 'unit' and 'part' can be used together or interchangeably.

The present invention can be applicable to a various types of terminals. Examples of such terminals include mobile as well as stationary terminals, such as mobile phones, user equipment, smart phones, DTV, computers, digital broadcast terminals, personal digital assistants, portable multimedia players (PMP) and navigation systems.

However, by way of non-limiting example only, further description will be provided with regard to a mobile terminal 100. It should be noted that such teachings may apply equally to other types of terminals.

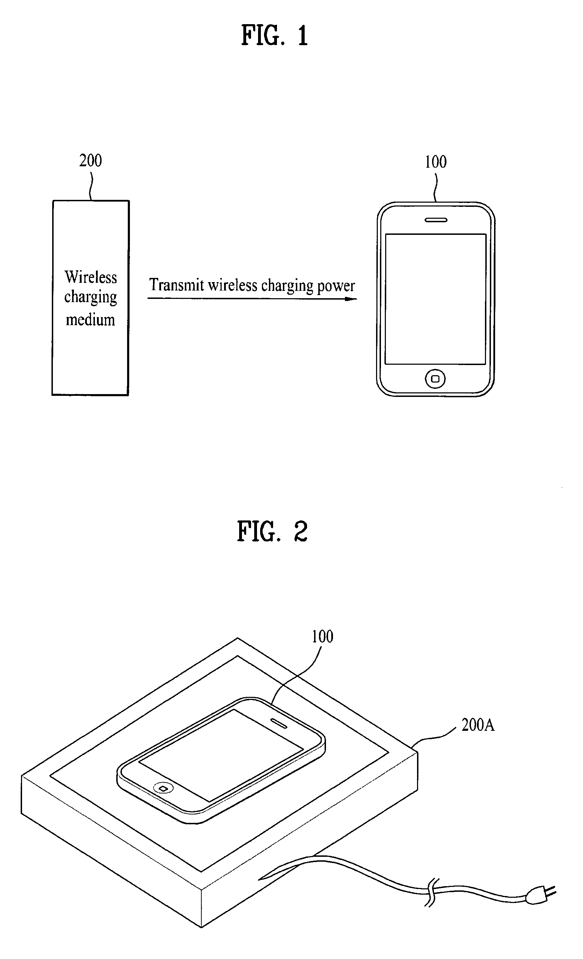

First of all, a wireless charging system including a wireless charging medium 200 and a mobile terminal according to the present invention is described in detail with reference to FIGs. 1 to 6 as follows.

FIG. 1 is a diagram of a wireless charging system according to the present invention includes a wireless charging medium 200 generating a wireless charging power of a mobile terminal 100 by magnetic induction or magnetic resonance and a mobile terminal 100 charging a battery by receiving the wireless charging power generated from the wireless charging medium 200.

In this case, the wireless charging medium 200, as shown in FIGs. 2 to 6 in the following, transmits a wireless charging power to the mobile terminal 100 using magnetic induction or magnetic resonance.

FIG. 2 is a perspective diagram of a wireless charging system including a wireless charging pad of magnetic induction and a mobile terminal according to the present invention.

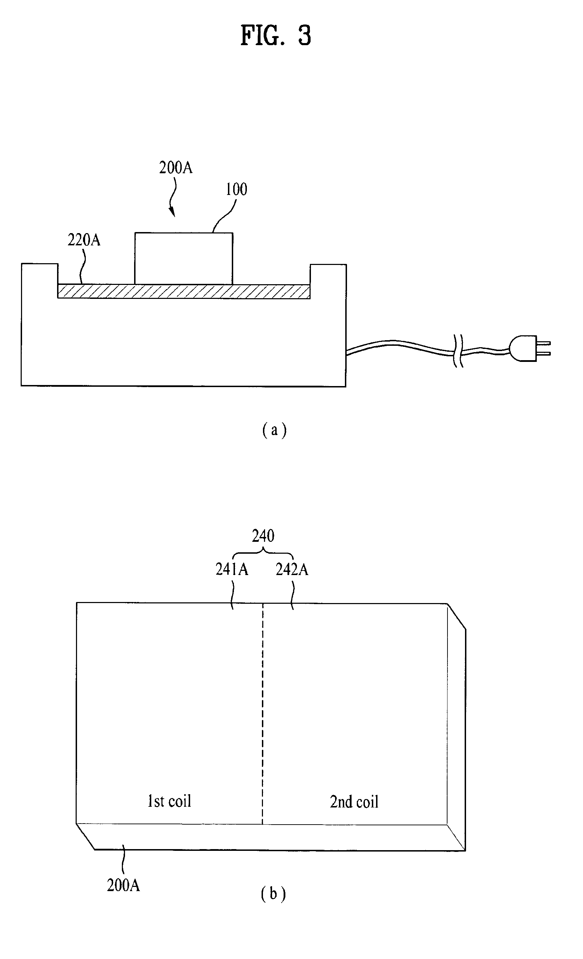

FIG. 3 is a diagram for a structure of a wireless charging pad according to the present invention.

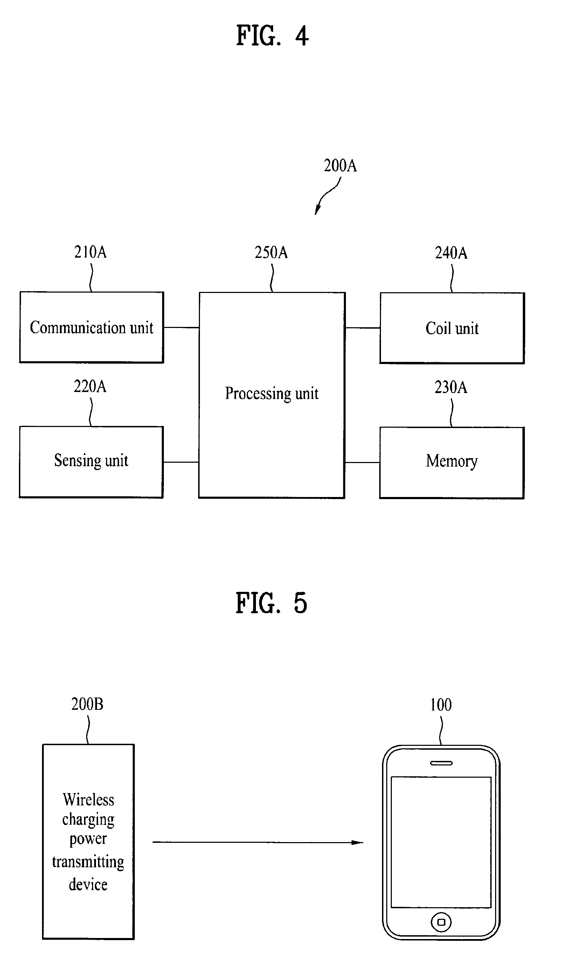

FIG. 4 is a block diagram of a wireless charging pad according to the present invention.

Referring to FIGs. 2 to 4, a wireless charging pad 200A according to the present invention means a charging device for charging a battery 190 of a mobile terminal 100 by wireless using electromagnetic induction.

And, charging efficiency means such an extent that a power supplied for a charging from the wireless charging pad 200A is transmitted to the battery 190 of the mobile terminal 100 by the electromagnetic induction.

The wireless charging pad 200A, as shown in FIG. 3 (a), is able to include a sensing unit 220A for detecting a location according to a contact of the mobile terminal 100 on the wireless charging pad 200A. And, the sensing unit 220A shall be described in detail with reference to FIG. 4 later.

The wireless charging pad 200A includes a coil unit 240A configured to generate a magnetic field by being supplied with the power. In this case, the coil unit 240A, as shown in FIG. 3 (b), is able to include at least one or two coils 241A and 242A. And, the coil unit 240A shall be described in detail with reference to FIG. 4 later.

Meanwhile, the mobile terminal 100 is a wireless rechargeable terminal and is able to include a coil unit 194 configured to generate an inducted current (i.e., a wireless charging power) in accordance with the magnetic field generated from the wireless charging pad 200A. Hence, the mobile terminal 100 is able to charge the battery 190 using the induced current. In this case, the wireless charging principle is based on Maxwell Equation. Since such a principle is apparent to those skilled in the art to which the technical field of the present invention pertains, details shall be omitted from the following description.

Referring to FIG. 4, the wireless charging pad 200A includes a communication unit 210A, a sensing unit 220A, a memory 230A, a coil unit 240A and a processing unit 250A.

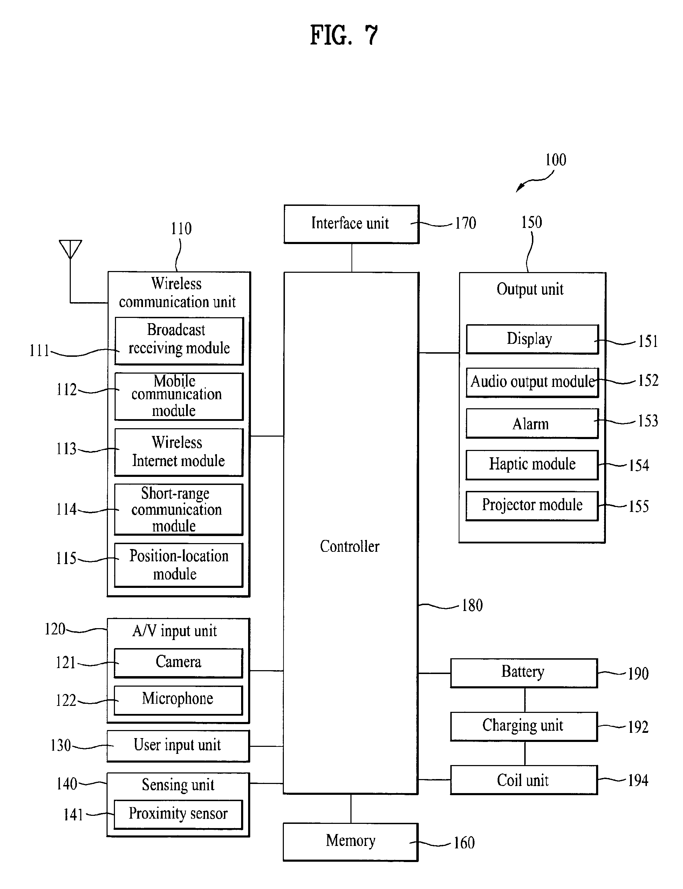

The communication unit 210A is a device for communication with the mobile terminal 100. The communication unit 210A can perform the same operations of a wireless communication unit 110 of a mobile terminal 100 shown in Fig. 7 and is also able to have the same components of the wireless communication unit 110 shown in FIG. 7.

The sensing unit 220A is a sensor for detecting a contact with the mobile terminal 100 if the mobile terminal 100 is placed on the wireless charging pad 200A. And, the sensing unit 220A is the sensor for recognizing a location of the mobile terminal 100 relative to the wireless charging pad 200A.

The sensing unit 220A can use a pressure detecting sensor and the like. And, the sensing unit 220A can be situated on a top surface of the wireless charging pad 220A which is to come into contact with the mobile terminal 100. In particular, if there is a contact with the mobile terminal 100, the sensing unit 220A confirms a location of the mobile terminal 100 and is then able to deliver the confirmed location to the processing unit 250A.

Subsequently, the processing unit 250A controls the communication unit 210A or the coil unit 240A, which will be mentioned in the following description, to transmit the location information, which is delivered from the sensing unit 220A, of the mobile terminal 100 relative to the wireless charging pad 200A to the mobile terminal 100.

The coil unit 240A is a kind of an electromagnet that generates a magnetic filed in case of having a power applied thereto. For instance, the coil unit 240A can include a solenoid.

The magnetic field generated from the coil unit 240A induces the magnetic field on the coil unit 194 included in the mobile terminal 100. The magnetic filed induced on the coil unit 194 is then able to generate an induced current.

In doing so, the coil unit 240A is able to generate the magnetic field, which corresponds to the location information (i.e., the information delivered from the sensing unit 220A) of the mobile terminal 100 relative to the wireless charging pad 200A, under the control of the processing unit 250A.

In particular, if the magnetic field, which is generated from the coil unit 240A of the wireless charging pad 200A, corresponding to the location information of the mobile terminal 100 is induced on the coil unit 194, a controller 180 of the mobile terminal 100 recognizes an induced current value according to the induced magnetic field as the location information of the mobile terminal 100.

As mentioned in the foregoing description, the controller 180 of the mobile terminal 100 is able to receive the location information of the mobile terminal 100 from the wireless charging pad 200A via the wireless communication unit 110.

Meanwhile, the coil unit 240A, as shown in FIG. 3 (b), can include at least one or more coils 241A and 242A. The processing unit 250A is able to transmit location information of the coil 241A or 242A, which is paired with the coil unit 194 of the mobile terminal 100, to the mobile terminal 100 via the communication unit 210A or the sensing unit 220A.

The controller 180 of the mobile terminal 100 receives the location information of the paired coil via the wireless communication unit 110 or the coil unit 194 and then recognizes the received location information of the coil as the location information of the mobile terminal 100 relative to the wireless charging pad 200A.

The memory 230A is able to store programs requires for functional operations of the wireless charging pad 200A. In particular, the memory 230A of the present invention is able to store a communication program for the communication with the mobile terminal 100. In this case, as mentioned in the foregoing description, the communication program can include the communication program that uses a change of the magnetic field. And, the memory 230A is able to store authentication information for checking whether the mobile terminal 100 is a rechargeable device. The reason why the authentication procedure is to prevent an unauthenticated electronic device from being damaged (e.g., overheating, magnetic damage, etc.) by the magnetic field generated from the coil unit 240A.

The processing unit 250A controls overall operations of the wireless charging pad 200A, controls a signal flow between internal blocks, and is able to perform a data processing function and the like. Specifically, if a contact with the mobile terminal 100 is detected via the sensing unit 220A or at least two coils 241A and 242A, the processing unit 250A of the present invention is able to check whether the mobile terminal 100 is the rechargeable authenticated device. This is to prevent a magnetic of a credit card, a transportation card or the like from being damaged by the magnetic field when such an object as a wallet and the like except the mobile terminal 100 is placed.

In case of the authenticated mobile terminal 100 as a result of the check, the processing unit 250A confirms a location of the mobile terminal 100 relative to the wireless charging pad 200A via the sensing unit 220A or the at least two coils 241A and 242A and is then able to transmit the confirmed location information of the mobile terminal 100 to the mobile terminal 100 via the communication unit 210A or the coil unit 240A.

FIG. 5 is a diagram of a wireless charging system including a wireless charging power transmitting device of magnetic resonance and a mobile terminal according to the present invention,

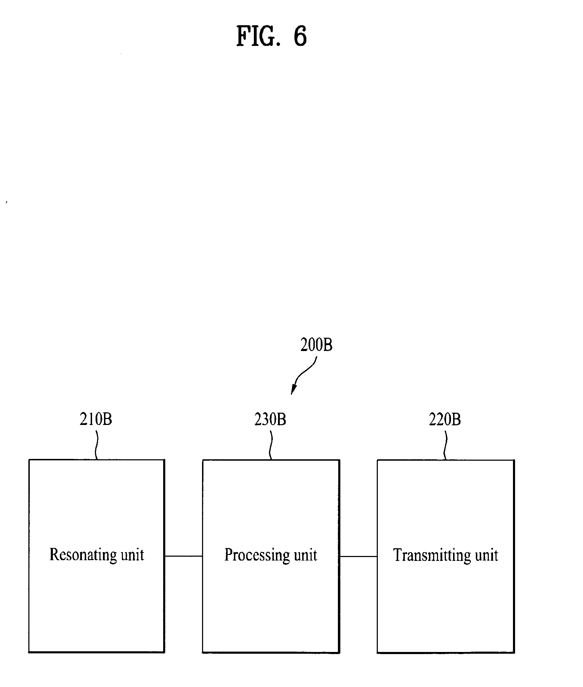

FIG. 6 is a block diagram of a wireless charging power transmitting device according to the present invention.

Referring to FIG. 5 and FIG. 6, a wireless charging power transmitting device 200B according to the present invention means a charging device for charging the battery 190 of the mobile terminal 100 with electricity by wireless using magnetic resonance.

The wireless charging power transmitting device 200B includes a resonating unit 210B, a transmitting unit 220B and a processing unit 230B.

The resonating unit 210B outputs a charging power in a manner of converting the charging power into a vibration frequency having a specific frequency by magnetic resonance using a coil.

The transmitting unit 220B transmits the vibration frequency outputted from the resonating unit 210B to the mobile terminal 100.

The charging unit 192 of the mobile terminal 100 receives the vibration frequency. The received vibration frequency is converted to a wireless charging power using the coil unit 194 of the mobile terminal 100.

The processing unit 230B controls overall operations of the wireless charging power transmitting device 200B, controls a signal flow between internal blocks, and is able to perform a data processing function and the like.

FIG. 7 is a block diagram of a mobile terminal 100 in accordance with an embodiment of the present invention. Referring to FIG. 7, the mobile terminal 100 includes a wireless communication unit 110, an audio/video (A/V) input unit 120, a user input unit 130, a sensing unit 140, an output unit 150, a memory 160, an interface unit 170, a controller 180, and a battery 190, a charging unit 192 and a coil unit 194. Although FIG. 7 shows the mobile terminal 100 having various components, it is understood that implementing all of the illustrated components is not a requirement. More or fewer components may alternatively be implemented.

The wireless communication unit 110 includes one or more components that permit wireless communication between the mobile terminal 100 and a wireless communication system or a network within which the mobile terminal 100 is located. For example, the wireless communication unit 110 includes a broadcast receiving module 111, a mobile communication module 112, a wireless Internet module 113, a short-range communication module 114 and a position-location module 115. For non-mobile terminals, the wireless communication unit 110 may be replaced with a wired communication unit. The wireless communication unit 110 and a wired communication unit (not shown) may be commonly referred to as a communication unit.

The broadcast receiving module 111 receives a broadcast signal and/or broadcast associated information from an external broadcast managing entity via a broadcast channel. The broadcast channel may include a satellite channel and/or a terrestrial channel.

The broadcast managing entity may refer to a system that transmits a broadcast signal and/or broadcast associated information. The broadcast managing entity may be a server that generates and transmits broadcast signals and/or broadcast associated information or a server for receiving previously generated broadcast signals and/or broadcast-related information and transmitting the broadcast signals and/or the broadcast associated information to the mobile terminal 100. The broadcast signals may include not only TV broadcast signals, radio broadcast signals, and data broadcast signals, but also signals in the form of a TV broadcast signal combined with a radio broadcast signal.

The mobile terminal 100 may include at least two broadcast receiving modules 111 for providing simultaneous reception of at least two broadcast channels. The at least two broadcast receiving modules may also be used to facilitate switching of broadcast channels.

The broadcast associated information may be information about a broadcast channel, a broadcast program, or a broadcast service provider. The broadcast associated information may even be provided over a mobile communication network. In the latter case, the broadcast associated information may be received via the mobile communication module 112. Examples of broadcast associated information include an electronic program guide (EPG) of digital multimedia broadcasting (DMB) and an electronic service guide (ESG) of digital video broadcast-handheld (DVB-H).

The broadcast receiving module 111 may receive broadcast signals transmitted from various types of broadcast systems. As a non-limiting example, the broadcast systems include digital multimedia broadcasting-terrestrial (DMB-T), digital multimedia broadcasting-satellite (DMB-S), digital video broadcast-handheld (DVB-H), a data broadcasting system known as media forward link only (MediaFLO®) and integrated services digital broadcast-terrestrial (ISDB-T). The broadcast receiving module 111 may also receive multicast signals. The broadcast signals and/or the broadcast associated information received by the broadcast receiving module 111 may be stored in a suitable storage device, such as in the memory 160.

The mobile communication module 112 transmits/receives wireless signals to/from at least one of a base station, an external terminal or a server over a mobile communication network. The wireless signals may represent, for example, voice call signals, video telephony call signals or data in various forms according to the transmission/reception of text and/or multimedia messages.

The wireless Internet module 113 supports Internet access for the mobile terminal 100. The wireless Internet module 113 may be internally or externally coupled to the mobile terminal 100. Suitable technologies for wireless Internet include, but are not limited to, WLAN (Wireless LAN), Wi-Fi®, Wibro® (Wireless broadband), Wimax® (World Interoperability for Microwave Access), and HSDPA (High Speed Downlink Packet Access). The wireless Internet module 113 may be replaced with a wired Internet module (not shown) in non-mobile terminals. The wireless Internet module 113 and the wired Internet module may be commonly referred to as an Internet module.

The short-range communication module 114 facilitates relatively short-range communications. Suitable technologies for short-range communication include, but are not limited to, radio frequency identification (RFID), infrared data association (IrDA), ultra-wideband (UWB), as well as networking technologies such as Bluetooth® and ZigBee®.

The position-location module 115 identifies or otherwise obtains a location of the mobile terminal 100. The position-location module 115 may obtain position information by using a global navigation satellite system (GNSS). The GNSS is a term used to describe radio navigation satellite systems configured to send reference signals capable of determining their positions on the surface of the earth or near the surface of the earth while revolving around the earth. The GNSS includes: a global position system (GPS) operated by the U.S.A.; Galileo, operated by Europe; a global orbiting navigational satellite system (GLONASS) operated by Russia; COMPASS, operated by China; and a quasi-zenith satellite system (QZSS) operated by Japan.

As a typical example of the GNSS, the position-location module 115 is a GPS module. The position-location module 115 may calculate information related to distances between one point or object and at least three satellites and information related to the time when the distance information was measured and apply trigonometry to the obtained distance information to obtain three-dimensional position information on the point or object according to the latitude, longitude, and altitude at a predetermined time. Furthermore, a method of calculating position and time information using three satellites and correcting the calculated position and time information using another satellite may also used. The position-location module 115 continues to calculate a current position in real time and to calculate velocity information based on the position information.

With continued reference to FIG. 1, the audio/video (A/V) input unit 120 may be configured to provide audio or video signal input to the mobile terminal 100. The A/V input unit 120 may include a camera 121 and a microphone 122. The camera 121 processes image frames of still pictures or video obtained by an image sensor in a photographing mode or a video telephony mode. The processed image frames may be displayed on a display unit 151.

The image frames processed by the camera 121 may be stored in the memory 160 or transmitted to an external device through the wireless communication unit 110. Optionally, the mobile terminal 100 can include two or more cameras 121, if appropriate.

The microphone 122 receives an external audio signal while the mobile terminal 100 is in a particular mode, such as a phone call mode, a recording mode and/or a voice recognition mode. The received audio signal is processed and converted into digital data. In the call mode, the processed digital data is transformed into a format transmittable to a mobile communication base station via the mobile communication module 112 and then output. Furthermore, the mobile terminal 100, and in particular the A/V input unit 120, may include a noise removing algorithm to remove noise generated during the course of receiving the external audio signal.

The user input unit 130 generates input data in response to user manipulation of an associated input device or devices. Examples of such devices include a keypad, a dome switch, a touchpad (e.g., static pressure/capacitance), a jog wheel and a jog switch. A specific example of the user input unit 130 is a touch screen in which a touchpad is combined with a display, as will be described below.

The sensing unit 140 provides status measurements of various aspects of the mobile terminal 100. For example, the sensing unit 140 may detect an open/closed status of the mobile terminal 100, relative positioning of components (e.g., a display and a keypad) of the mobile terminal 100, a change of position of the mobile terminal 100 or a component of the mobile terminal 100, a presence or absence of user contact with the mobile terminal 100, an orientation of the mobile terminal 100 and/or acceleration/deceleration of the mobile terminal 100.

As an example, the mobile terminal 100 may be configured as a slide-type mobile terminal in which the sensing unit 140 may sense whether a sliding portion of the mobile terminal 100 is open or closed. The sensing unit 140 may also sense a presence or absence of power provided by the power supply unit 190 or a presence or absence of a coupling or other connection between the interface unit 170 and an external device. The sensing unit 140 may include a proximity sensor 141.

The output unit 150 generates output relevant to the senses of sight, hearing and touch. The output unit 150 may include a display unit 151, an audio output module 152, an alarm 153, a haptic module 154, and a projector module 155.

The display unit 151 displays information processed by the mobile terminal 100. For example, when the mobile terminal 100 is in a call mode, the display unit 151 may display a user interface (UI) or a graphic user interface (GUI) associated with the call. If the mobile terminal 100 is in a video communication mode or a photograph mode, the display unit 151 may display a photographed and/or received picture, a UI or a GUI.

The display unit 151 may include a liquid crystal display (LCD), a thin film transistor liquid crystal display (TFT LCD), an organic light-emitting diode (OLED), a flexible display, or a 3-dimensional display. The mobile terminal 100 may include one or more of such displays.

The display unit 151 may have a transparent or light-transmittive type configuration, hereinafter referred to as a transparent display. A transparent OLED (TOLED) is an example of a transparent display. A rear configuration of the display unit 151 may also have the light-transmittive type configuration. In this configuration, a user is able to see an object located behind the terminal body via the area occupied by the display unit 151 of the terminal body.

At least two display units 151 may be provided. For example, a plurality of display units 151 may be provided on a single face of the mobile terminal 100 spaced apart from each other or built in one body. Alternatively, each of a plurality of display units 151 may be provided on different faces of the mobile terminal 100.

If the display unit 151 and a sensor for detecting a touch action (hereafter referred to as a 'touch sensor') are constructed in a mutual-layered structure (hereafter referred to as a 'touch screen'), the display unit 151 may be used as an input device and an output device. For example, the touch sensor may include a touch film, a touch sheet or a touchpad.

The touch sensor can be configured to convert a pressure applied to a specific portion of the display unit 151 or a variation of electrostatic capacity generated from a specific portion of the display unit 151 to an electric input signal. The touch sensor may detect a pressure of a touch as well as a touched position or magnitude of the touch.

If a touch input is made to the touch sensor, a signal(s) corresponding to the touch input is transferred to a touch controller (not shown). The touch controller processes the signal(s) and then transfers corresponding data to the controller 180. The controller 180 may determine, therefore, which portion of the display unit 151 is touched.

With continued reference to FIG. 1, a proximity sensor 141 can be provided within the mobile terminal 100 enclosed by the touch screen or around the touch screen. The proximity sensor 141 may detect a presence or non-presence of an object approaching a specific detecting surface or an object existing around the proximity sensor 141 using an electromagnetic field strength or infrared ray without mechanical contact. Accordingly, the proximity sensor 141 may have greater durability and greater utility than a contact type sensor.

The proximity sensor 141 can include a transmittive photoelectric sensor, a direct reflective photoelectric sensor, a mirror reflective photoelectric sensor, a radio frequency oscillation proximity sensor, an electrostatic capacity proximity sensor, a magnetic proximity sensor or an infrared proximity sensor. If the touch screen is an electrostatic type touch screen, the proximity sensor 141 may detect proximity of a pointer using a variation of an electric field according to the proximity of the pointer and the touch screen (touch sensor) may be classified as the proximity sensor 141.

An action in which a pointer approaches the touch screen without contacting the touch screen, yet is recognized as being located on the touch screen, is referred to as a 'proximity touch'. An action in which the pointer actually touches the touch screen is referred to as a 'contact touch'. The position on the touch screen proximity-touched by the pointer refers to the position of the pointer that vertically opposes the touch screen when the pointer performs the proximity touch.

The proximity sensor 141 may detect a proximity touch and/or a proximity touch pattern (e.g., proximity touch distance, proximity touch duration, proximity touch position, proximity touch shift state). Information corresponding to the detected proximity touch action and/or the detected proximity touch pattern may be displayed on the touch screen.

The audio output module 152 may output audio data that is received from the wireless communication unit 110 in, for example, a call-receiving mode, a call-placing mode, a recording mode, a voice recognition mode or a broadcast receiving mode. The audio output module 152 may output audio data stored in the memory 160. The audio output module 152 may output an audio signal relevant to a function (e.g., a call signal receiving sound, a message receiving sound, etc.) performed by the mobile terminal 100. The audio output module 152 may include, for example, a receiver, a speaker or a buzzer.

The alarm 153 outputs a signal for announcing an occurrence of a particular event associated with the mobile terminal 100. Typical events include a call signal reception, a message reception, a key signal input and a touch input. The alarm 153 outputs a signal for announcing the event occurrence via vibration as well as a video signal or an audio signal. The video signal is output via the display unit 151 and the audio signal is output via the audio output module 152. Hence, at least the display unit 151 or the audio output module 152 can be regarded as part of the alarm 153.

The haptic module 154 may generate various haptic effects that can be sensed by a user. Vibration is a representative tactile effect generated by the haptic module 154. Strength and pattern of the vibration generated from the haptic module 154 may be controllable. For example, vibrations differing from each other can be output by being synthesized together or can be output in sequence.

The haptic module 154 may generate various haptic effects in addition to vibration. For example, the haptic module 154 may generate an effect caused by a pin array vertically moving against skin being touched, an air injection force via an injection hole, an air suction force via a suction hole, an effect of skimming on a skin surface, an effect of contact with an electrode, an effect of electrostatic power and/or an effect of a hot/cold sense using an endothermic or exothermic device.

The haptic module 154 can be configured to provide the haptic effect via direct contact. The haptic module 154 can also be configured to enable a user to experience the haptic effect via muscular sense of a finger or an arm. Two or more haptic modules 154 can be provided according to a configuration of the mobile terminal 100.

The projector module 155 is configured to perform an image projection function. More particularly, the projector module 155 is configured to display an image that is either identical to or at least partially different from the image displayed on the display unit 151 on an external screen or wall based on a control signal from the controller 180.

The projector module 155 may include a light source (not shown) configured to generate light (e.g., a laser) for projecting an image external to the mobile terminal 100, an image producing means (not shown) for producing the image for external output using the light generated from the light source, and a lens (not shown) for enlarging the image to be output externally at a predetermined focus distance. The projector module 155 may further include a device (not shown) for adjusting a direction of the projected image by mechanically moving the lens or the entire module.

The projector module 155 may be classified as, for example, a cathode ray tube (CRT) module, a liquid crystal display (LCD) module, or a digital light processing (DLP) module based on a type of a display means. In particular, the DLP module is operated by a mechanism enabling the light generated from the light source to reflect on a digital micro-mirror device (DMD) chip and advantageously allows the projector module 151 to be a smaller size.

The projector module 155 may be provided in a lengthwise direction of a lateral, front or rear side of the mobile terminal 100. It is understood that the projector module 155 may be positioned at any portion of the mobile terminal 100 as necessary.

The memory 160 is generally used to store various types of data for supporting the processing, control, and storage requirements of the mobile terminal 100. Examples of such data include program instructions for applications operating on the mobile terminal 100, contact data, phonebook data, messages, audio, still pictures, and moving pictures. A recent use history or a cumulative use frequency of each data (e.g., use frequency for each phonebook, each message or each multimedia) may be stored in the memory 160. Moreover, data for various patterns of vibration and/or sound to be output when a touch input is received at the touchscreen may be stored in the memory 160.

The memory 160 may include, for example, a flash memory, a hard disk, a multimedia card micro type memory, a card type memory (e.g., SD memory, XD memory, etc.), a random access memory (RAM), a static random access memory (SRAM), a read-only memory (ROM), an electrically erasable programmable read-only memory (EEPROM), a programmable read-only memory(PROM), a magnetic memory, a magnetic disk or an optical disk. The mobile terminal 100 may operate in association with a web storage that performs a storage function of the memory 160 via the Internet.

The interface unit 170 couples the mobile terminal 100 with external devices. The interface unit 170 receives data from an external device. The interface unit 170 is supplied with power and may be configured to deliver the power to elements within the mobile terminal 100. The interface unit 170 may be configured to enable data to be transferred from the mobile terminal 100 to an external device. The interface unit 170 may be configured to include a wired/wireless headset port, an external charger port, a wire/wireless data port, a memory card port, a port for coupling to a device having an identity module, an audio input/output (I/O) port, a video input/output (I/O) port or an earphone port.

The identity module is a chip or card that stores various types of information for authenticating a use authority of the mobile terminal 100 and can include a user identity module (UIM), a subscriber identity module (SIM) and/or a universal subscriber identity module (USIM). A device provided with the above identity module (hereafter referred to as an 'identity device') may be manufactured in the form of a smart card. The identity device is connectable to the mobile terminal 100 via a corresponding port.

The interface unit 170 may be configured as a passage for supplying power to the mobile terminal 100 from a cradle that is connected to the mobile terminal 100. The interface unit 170 may facilitate delivery of various command signals, which are input via the cradle by a user, to the mobile terminal 100. Various command signals input via the cradle or the power may work as a signal for recognizing that the mobile terminal 100 is correctly loaded in the cradle.

The controller 180 typically controls the overall operations of the mobile terminal 100. For example, the controller 180 performs control and processing associated with voice calls, data communications and video conferences. The controller 180 may include a multimedia module 181 that provides multimedia playback. The multimedia module 181 may be configured as part of the controller 180 or may be configured as a separate component. The controller 180 may also perform pattern recognizing processing for recognizing a handwriting input performed on the touch screen as a character and/or recognizing a picture drawing input performed on the touch screen as characters or images.

The battery 190 supplies a power to the respective components provided to the mobile terminal 100 under the control of the controller 180. And, the battery 190 recharges the wireless charging power of the wireless charging medium 200.

The battery 190 is configured in a manner of including the coil unit 194 explained in the following description. Alternatively, the battery 190 can be configured in a manner of including the charging unit 192 and the second coil unit 194.

The coil unit 194 induces the magnetic field generated from the wireless charging pad 200A by electromagnetic induction and then generates an induced current attributed to the induced magnetic field. The principle of the electromagnetic induction is apparent to those skilled in the art and its details shall be omitted from the following description.

The coil unit 194 receives the wireless charging power generated from the wireless charging power transmitting device 200A by the magnetic resonance.

Meanwhile, it is preferable that the coil unit 194 is installed in a manner of being cut of from other electronic circuits. This to prevent other circuits from being damaged by the magnetic field generated from the coil unit 194.

The charging unit 192 is able to charge the battery 190 using the wireless charging power generated from the wireless charging pad 200A or the wireless charging power transmitting device 200B. For this, the charging unit 192 is able to include a charging circuit, an over-current or over-voltage protection circuit.

Embodiments of the present invention described in the following description may be implemented within a recording medium that can be read by a computer or a computer-like device using software, hardware or combinations thereof. For hardware implementations, arrangements and embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors or electrical units for performing other functions. Such embodiments may also be implemented by the controller 180.

For a software implementation, arrangements and embodiments described herein may be implemented with separate software modules, such as procedures and functions, each of which may perform one or more of the functions and operations described herein. Software codes may be implemented with a software application written in any suitable programming language and may be stored in the memory 160 and executed by the controller 180.

In the above description, so far, the mobile terminal 100 and the wireless charging medium 200 according to the present invention are explained in detail

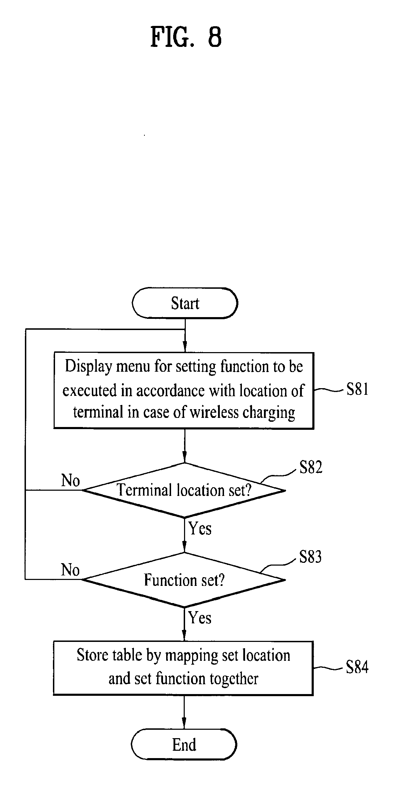

In the following description, when the mobile terminal 100 charges the battery 190 by wireless via the wireless charging medium 200, an embodiment of the present invention is described in detail with reference to FIGs. 8 to 30.

### First Embodiment

A first embodiment of the present invention relates to a process for executing a function preset at a location of the mobile terminal or a function preset in a preset time zone if a wireless charging of the battery 190 of the mobile terminal 100 is initiated via the wireless charging medium 200.

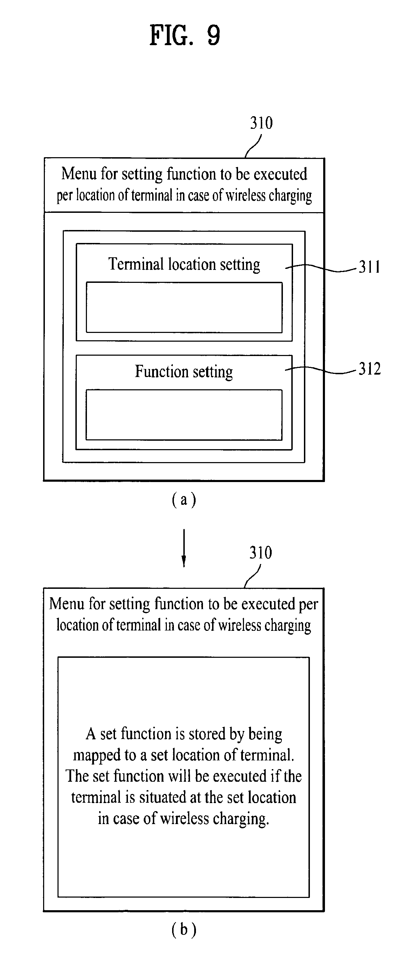

In the following description, a process for setting a function to be executed per location of the mobile terminal 100 in case of a wireless charging of the battery 190 of the mobile terminal 100 is explained in detail with reference to FIG. 8 and FIG. 9. Alternatively, without the setting process shown in FIG. 8 and FIG. 9, a function to be executed per location of the mobile terminal 100 can be previously set as a default in the memory 160 of the mobile terminal 100.

FIG. 8 is a flowchart of a process for setting a function to be executed per location of a mobile terminal in case of a wireless charging of the mobile terminal according to a first embodiment of the present invention.

FIG. 9 is a diagram of screen configuration of a process for setting a function to be executed per location of a mobile terminal in case of a wireless charging of the mobile terminal according to a first embodiment of the present invention.

Referring to FIG. 8 and FIG. 9, in accordance with a user's request, the controller 180 of the mobile terminal 100 displays a menu 310 for setting a function to be executed per location of the mobile terminal 100 in case of a wireless charging of the battery 190 via the external wireless charging medium 200 [S81] [FIG. 9 (a)].

As mentioned in the foregoing description with reference to FIGs. 1 to 6, the wireless charging medium 200 can include the wireless charging pad 200A by the electromagnetic induction or the wireless charging power transmitting device 200B by the magnetic resonance.

Referring to FIG. 9 (a), the menu 310 includes a location setting window 311 for a location setting of the mobile terminal 100 and a function setting window 312 for setting a function to be mapped to a location set via the location setting window 311.

If a specific location information of the mobile terminal 100 is set via the location setting window 311 [S82] and a specific function to be mapped to the set location is set via the function setting window 312 [S83], the controller 180 enables the set location and the set function to be mapped to each other and then controls the mapped information to be stored as a table in the memory 160 [S84] [FIG. 9 (b)].

In this case, the location information, which is set via the location setting window 311, of the mobile terminal 100 can contain a GPS coordinates information and a name indicating the GPS coordinates information. And, a user is able to directly input a GPS coordinates information corresponding to the location information of the mobile terminal 100 and a corresponding name of the GPS coordinates information via the location setting window 311.

If a user selects the location setting window 311, the controller 180 activates the position location module 115 and obtains a current location information of the mobile terminal 100. The controller 180 is then able to control the obtained location information to be automatically set.

If a user selects the location setting window 311, the controller 180 activates the position location module 115 and obtains a current area having a preset radius in which the mobile terminal 100 is located. The controller 180 is then able to search the map data previously provided to the memory 160 for a map indicating the obtained current area. Subsequently, the controller 180 displays the found map indicating the current area. If the user selects a specific point from the map, the controller 180 obtains a location information corresponding to the selected point and is then able to set the obtained location information.

If a user selects the location setting window 311, the controller 180 activates the position location module 115 and obtains a current region having a preset radius in which the mobile terminal 100 is located. The controller 180 is then able to transmit an information indicating the obtained current area to an external map data providing server (not shown in he drawings) via the wireless communication unit 110. Thereafter, if a map corresponding to the transmitted information is received from the map data providing server via the wireless communication unit 110, the controller 180 displays the received map. If the user selects a specific point from the map, the controller 180 obtains a location information corresponding to the selected point and is then able to set the obtained location information.

Meanwhile, functions of mapping to the location set via the location setting window 311 can include a function of all menus provided by the mobile terminal 100 and a function of executing all contents provided to the mobile terminal 100.

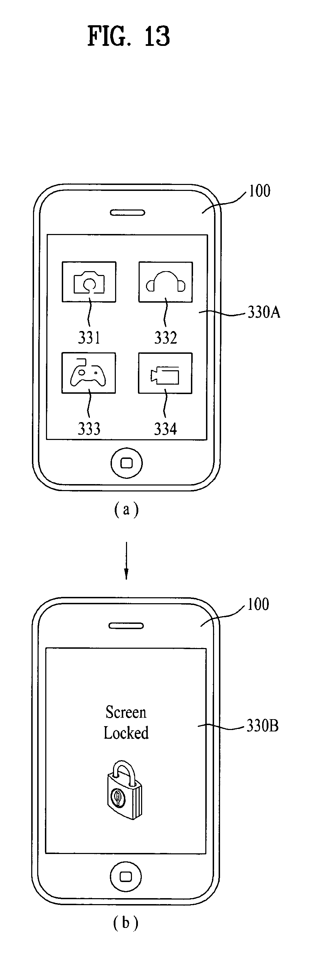

The functions of various types shall be described in detail with reference to FIGs. 13 to 29 later.

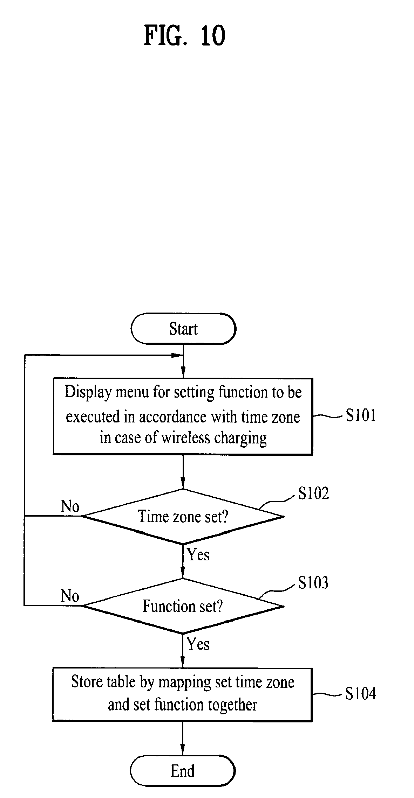

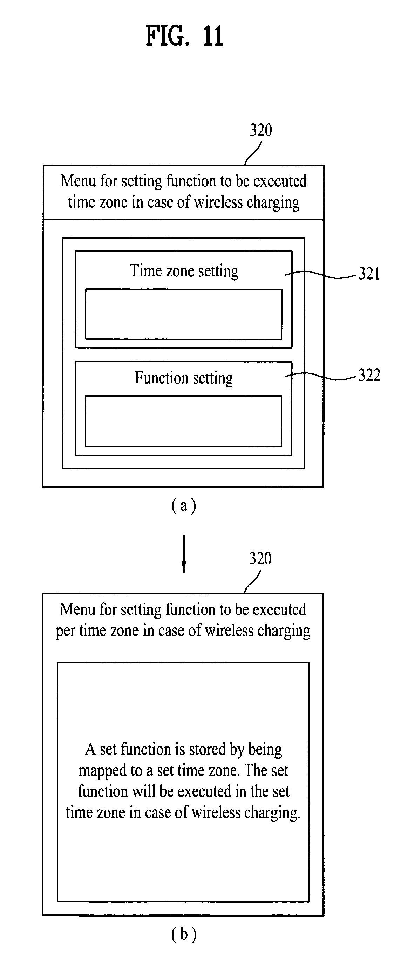

In the following description, a process for setting a function to be executed per time zone in case of a wireless charging of the battery 190 of the mobile terminal 100 is explained in detail with reference to FIG. 10 and FIG. 11. Alternatively, without the setting process shown in FIG. 10 and FIG. 11, a function to be executed per time zone can be previously set as a default in the memory 160 of the mobile terminal 100.

FIG. 10 is a flowchart of a process for setting a function to be executed per time zone in case of a wireless charging of a mobile terminal according to a first embodiment of the present invention.

FIG. 11 is a diagram of screen configuration of a process for setting a function to be executed per time zone in case of a wireless charging of a mobile terminal according to a first embodiment of the present invention.

Referring to FIG. 10 and FIG. 11, in accordance with a user's request, the controller 180 of the mobile terminal 100 displays a menu 320 for setting a function to be executed per time zone in case of a wireless charging of the battery 190 via the external wireless charging medium 200 [S101] [FIG. 11 (a)].

In this case, the time zone can include a specific time or a specific time interval. For instance, the time zone can indude '13:00 hour', '13:00 ∼ 15:00' or the like.

Referring to FIG. 11 (a), the menu 320 includes a time zone setting window 321 for setting a specific time zone and a function setting window 322 for setting a function to be mapped to a time zone set via the time zone setting window 321.

If a specific time zone is set via the time zone setting window 321 [S102] and a specific function to be mapped to the set time zone is set via the function setting window 322 [S103], the controller 180 enables the set time zone and the set function to be mapped to each other and then controls the mapped information to be stored as a table in the memory 160 [S104] [FIG. 11 (b)].

In this case, a user is able to directly input numerals or characters corresponding to a desired time zone via the time zone setting window 321.

If a user selects the time zone setting window 321, the controller 180 controls a keypad for inputting a user-specific time zone to be displayed on a screen and is then able to set a time zone to the numerals or characters, which are inputted by the user via the keypad.

Meanwhile, functions of mapping to time zone set via the time zone setting window 321 can include a function of all menus provided by the mobile terminal 100 and a function of executing all contents provided to the mobile terminal 100.

The functions of various types shall be described in detail with reference to FIGs. 13 to 29 later.

So far, a process for setting a function to be executed per preset location and/or per time zone in case of a wireless charging of the battery 190 of the mobile terminal 100 is described in detail with reference to FIGs. 8 to 11.

The above descriptions with reference to FIGs. 8 to 11 are separately classified into the process for setting a function to be executed per location and the process for setting a function to be executed per time zone. Alternatively, the controller 180 sets both of the location of the mobile terminal and the time zone together and is able to store the functions per the location and time zone set together in a manner of mapping the function set per the location and the function set per the time zone to each other.

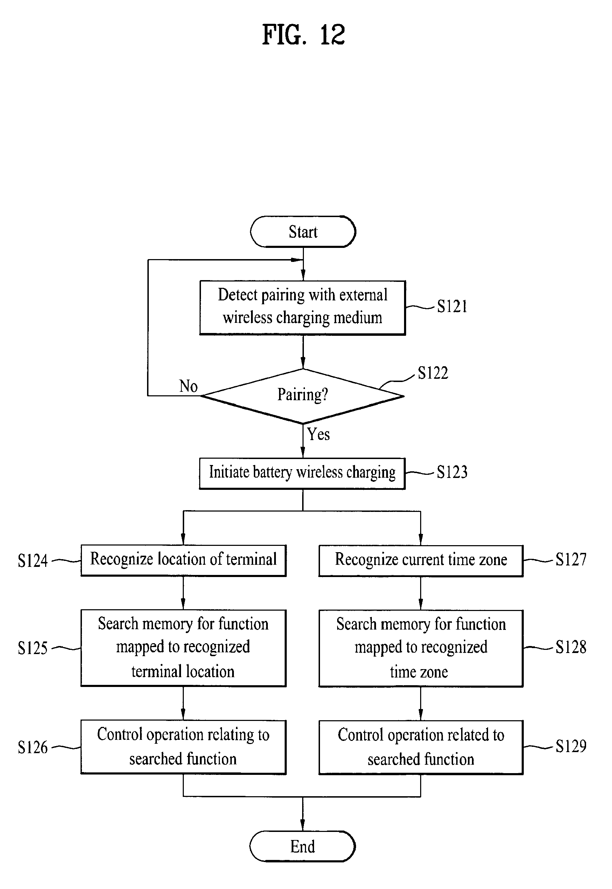

In the following description, a process for controlling an operation of a function set for a current location of a mobile terminal and/or a current time zone in case of a wireless charging of the mobile terminal according to the present invention is explained in detail with reference to FIGs. 12 to 29.

FIG. 12 is a flowchart of a process for controlling an operation of a function set for a current location of a mobile terminal and/or a current time zone in case of a wireless charging of the mobile terminal according to a first embodiment of the present invention.

Referring to FIG. 12, the controller 180 of the mobile terminal 100 detects whether a pairing for a wireless charging of the battery 190 with the external wireless charging medium 200 is established [S121].

In case that the wireless charging medium 200 is the wireless charging pad 200A, when a wireless charging power of an induced current type is received from the wireless charging pad 200A via the coil unit 194 and the charging unit 192, the controller 180 is able to recognizes that the pairing with the wireless charging pad 200A is established. If a location information of the mobile terminal 100 relative to the wireless charging pad 200A is received from the wireless charging pad 200A via the wireless communication unit 110, the controller 180 is able to recognize that the pairing with the wireless charging pad 200A is established.

In case that the wireless charging medium 200 is the wireless charging power transmitting device 200B, when a resonant frequency corresponding to a wireless charging power is received from the wireless charging power transmitting device 200B via the coil unit 194 and the charging unit 192, the controller 180 is able to recognize that the pairing with the wireless charging power transmitting device 200B is established.

Thus, if the pairing with the wireless charging medium 200 is established [S122], the controller 180 initiates a wireless charging of the battery 190 by receiving the wireless charging power from the wireless charging medium 200 via the coil unit 194 and the charging unit 192 [S123].

Optionally, before the wireless charging of the battery 190 is initiated, the controller 180 provides a user with a popup window for notifying an event of the pairing with the wireless charging medium 200 and querying whether to initiate the wireless charging. If the user inputs a command for initiating the wireless charging via the popup window or the user input unit 130, the controller 180 is able to initiate the wireless charging of the battery.

Thus, if the wireless charging of the battery 190 is initiated, the controller 180 obtains a current location and/or a current time zone, as shown mentioned in the following steps S124 to S129. Subsequently, the controller 180 searches the memory 160 for a function mapped to the obtained current location and/or the obtained current time zone and is then able to execute the found function.

In particular, if the wireless charging of the battery 190 is initiated, the controller 180 activates the position location module 115 and then obtains a current location of the mobile terminal 100 via the position location module 115 [S124].

In accordance with the aforesaid process shown in FIG. 8 and FIG. 9, the controller 180 searches the memory 160 having a table, in which at least one function is mapped to at least one location of the mobile terminal 100, for a function mapped to the obtained current location of the mobile terminal 100 [S125].

Subsequently, the controller 180 controls an execution operation of the found function [S126].

Alternatively, if the wireless charging of the battery 190 is initiated, the controller obtains a current time zone [S127].

In accordance with the aforesaid process shown in FIG. 10 and FIG. 11, the controller 180 searches the memory 160 having a table, in which at least one function is mapped to at least one time zone, for a function mapped to the obtained current time zone [S128]. The controller 180 then controls an execution operation of the found function [S129].

In this case, the function found in the step S125 or S128 includes a function corresponding to all menus provided by the mobile terminal 100 and is also able to include all contents executable in the mobile terminal 100. The found function includes an event related to a wireless charging and is able to include a function for sharing information with a preset external device.

In the following description, a process for controlling an execution operation of one of various functions set for a current location of the mobile terminal 100 and/or a time zone in case of a wireless charging of the mobile terminal 100 is explained in detail with reference to FIGs. 13 to 30.

### Embodiment 1-1

Embodiment 1-1 of the present invention relates to a function set for a current location of the mobile terminal 100 and/or a current time zone is a screen lock function or a screen unlock function in case of a wireless charging of the mobile terminal 100.

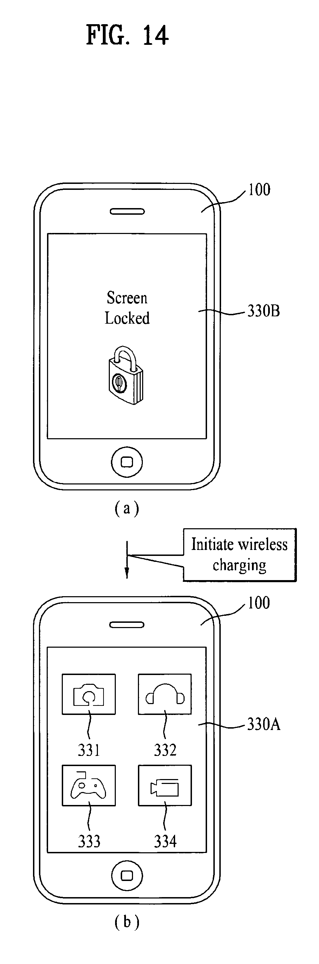

In the following description, an embodiment 1-1 of the present invention is explained in detail with reference to FIG. 13 and FIG. 14.

FIG. 13 and FIG. 14 are diagrams of screen configuration of a process for controlling an operation of a function set for a current location of a mobile terminal and/or a current time zone in case of a wireless charging of the mobile terminal according to an embodiment 1-1 of the present invention.

First of all, referring to FIG. 13 (a), for example, an information screen 330A containing a plurality of objects 331 to 334 is displayed on the display unit 151 of the mobile terminal 100.

In this case, the objects 331 to 334 can include applications and the information screen 330A can include a home screen containing the applications. Alternatively, the objects 331 to 334 can include menu icons and the information screen 330A can include a menu list screen containing the menu icons. Alternatively, the objects 331 to 334 can include indicators indicating operating statuses of the mobile terminal 100, respectively, and the information screen 330A can include a standby screen containing the indicators. In particular, the objects 331 to 334 include all displayable data provided to the mobile terminal 100 and the information screen 330A can include a screen having the corresponding data displayed thereon.

While the information screen 220A is displayed, if an initiation of a wireless charging of the battery 190 of the mobile terminal 100 is detected, the controller 180 obtains a current location and/or a current time zone of the mobile terminal 100, executes a screen lock function mapped to the obtained current location and/or time zone in the memory 160, and then switches to display the information screen 330A into a screen locked screen 330B, which indicates that the screen is locked [FIG. 13 (b)].

In this case, according to the screen lock function, even if a user's touch is inputted to the rest of a region except a region to which a function of canceling the screen lock is assigned, an operation corresponding to the inputted touch is not performed.

Thus, the screen of the mobile terminal 100 is locked in accordance with a preset location and a preset time zone of the mobile terminal in the course of the wireless charging of the battery 190. This is to prevent the following problem. First of all, when a user performs a wireless charging on the mobile terminal 100 at a public place and/or a public time zone except a privacy protective place (e.g., home, etc.) and/or a privacy protective time zone (e.g., a time zone in which a user stays at home), another person may view or use the mobile terminal 100 without permission.

Therefore, a user sets the screen lock function at a location of a privacy protective place and/or in a privacy protective time zone for the mobile terminal 100. When a wireless charging is performed on the battery at a place and/or in a time zone except the privacy protective place and/or the privacy protective time zone, the user is able to lock the screen of the mobile terminal 100 to prevent another person from viewing or using the mobile terminal 100 without permission.

Subsequently, referring to FIG. 14 (a), after the screen of the mobile terminal 100 has been locked, while the screen locked screen 330B indicating the screen locked state is displayed, if the initiation of the wireless charging of the battery 190 is detected, the controller 180 obtains a current location and/or a current time zone of the mobile terminal 100, executes a screen unlock function mapped to the obtained current location and/or time zone in the memory 160, and then switches to display the information screen 330A (i.e., the former screen before the screen was locked) from the screen locked screen 330B [FIG. 14 (b)].

Thus, the screen lock of the mobile terminal 100 is cancelled in accordance with a preset location and time zone of the mobile terminal in the course of a wireless charging of the battery 190. This is because it barely happens that another person views or uses the mobile terminal 100 without permission in the course of the wireless charging of the battery at a privacy protective place (e.g., user's home) and/or in a privacy protective time zone (e.g., a time zone in which a user stays at home).

### Embodiment 1-2

Embodiment 1-2 of the present invention relates to a function of locking/unlocking a use of a content included in a screen of the mobile terminal 100 in case of a wireless charging of the mobile terminal 100.

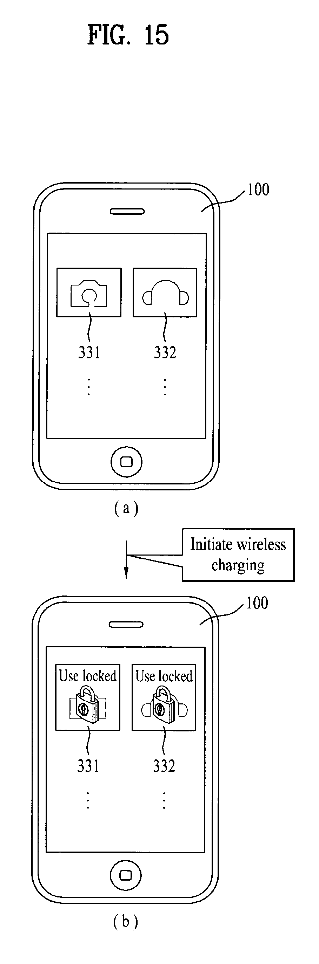

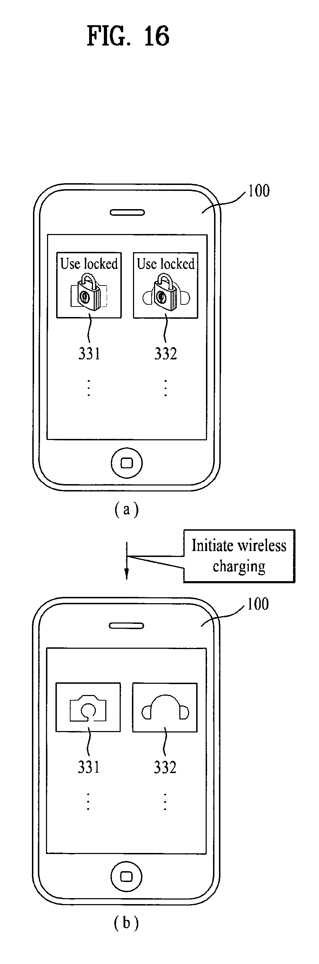

In the following description, an embodiment 1-2 of the present invention is explained in detail with reference to FIG. 15 and FIG. 16.

FIG. 15 and FIG. 16 are diagrams of screen configuration of a process for controlling an operation of a function set for a current location of a mobile terminal and/or a current time zone in case of a wireless charging of the mobile terminal according to an embodiment 1-2 of the present invention.

Referring to FIG. 15 (a), for example, at least two contents 331 and 332 are displayed on a screen of the display unit 151 of the mobile terminal 100.

While the contents 331 and 332 are displayed, if an initiation of a wireless charging of the battery 190 of the mobile terminal 100 is detected, the controller 180 obtains a current location and/or a current time zone of the mobile terminal 100, executes a use lock function mapped to the obtained current location and/or time zone in the memory 160, and then locks a use of the contents 331 and 332. [FIG. 15 (b)].

In this case, the use lock function of the content is a function not usable by another person. And, a password is set for the use lock function by a user. In particular, another person, who is not aware of the password, except the user is unable to use a corresponding content.

Meanwhile, the content includes such data, which is usable in the mobile terminal by a user's manipulation, as phonebook, message, music file, video file, image file, schedule menu, contact information, document file, game file, calculator file, webpage address file, electronic dictionary file, application operating system and the like.

Thus, the use of the content is locked in accordance with a preset location and a preset time zone of the mobile terminal in the course of the wireless charging of the battery 190. This is to prevent the following problem. First of all, when a user performs a wireless charging on the battery 190 at a public place and/or a public time zone except a privacy protective place (e.g., home, etc.) and/or a privacy protective time zone (e.g., a time zone in which a user stays at home), another person may use the content in the mobile terminal 100 without permission.

Therefore, a user sets the screen lock function at a location of a privacy protective place and/or in a privacy protective time zone for the mobile terminal 100. When a wireless charging is performed on the battery 190 at a place and/or in a time zone except the privacy protective place and/or the privacy protective time zone, the user is able to lock the use of the content to prevent another person from using the content without permission.

Subsequently, referring to FIG. 16 (a), for example, at least two contents 331 and 332 are displayed on the screen of the display unit 151 of the mobile terminal and a use of each of the contents 331 and 332 is locked.

While the use of each of the contents 331 and 332 is locked, if the initiation of the wireless charging of the battery 190 is detected, the controller 180 obtains a current location and/or a current time zone of the mobile terminal 100, executes a content use unlock function mapped to the obtained current location and/or time zone in the memory 160, and then cancels the use lock of the contents 331 and 332 [FIG. 16 (b)].

Thus, the content use lock is cancelled in accordance with a preset location and time zone of the mobile terminal in the course of a wireless charging of the battery 190. This is because it barely happens that another person uses the content in the mobile terminal 100 without permission in the course of the wireless charging of the battery 190 at a privacy protective place (e.g., user's home) and/or in a privacy protective time zone (e.g., a time zone in which a user stays at home).

### Embodiment 1-3

According to an embodiment 1-3 of the present invention, while the mobile terminal 100 is in the course of a wireless charging, if an event by an external terminal occurs, a function, which is set for a current location of the mobile terminal 100 and/or a current time zone, is a response function to the event.

In this case, the event by the external terminal can include a call reception, a message reception and the like.

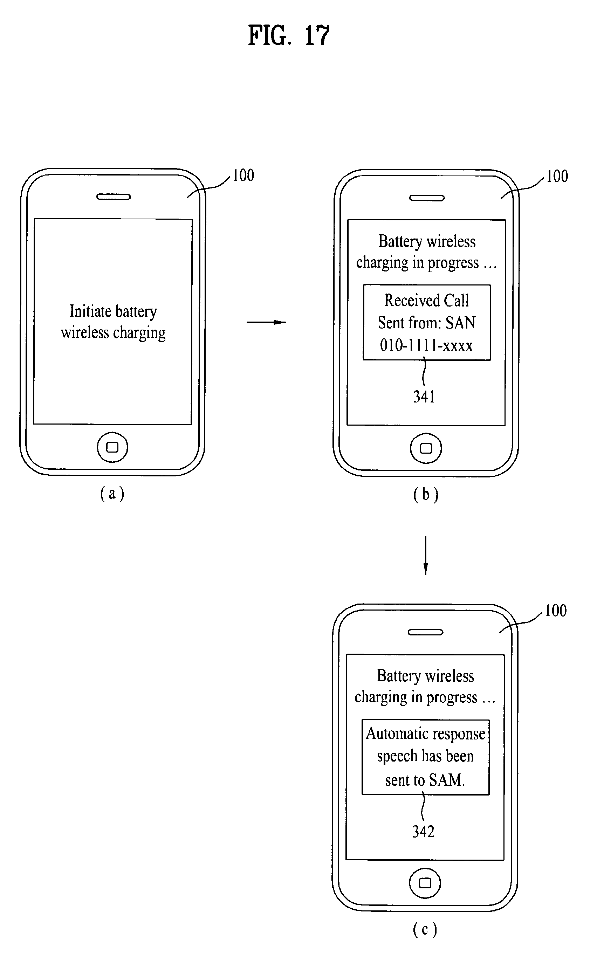

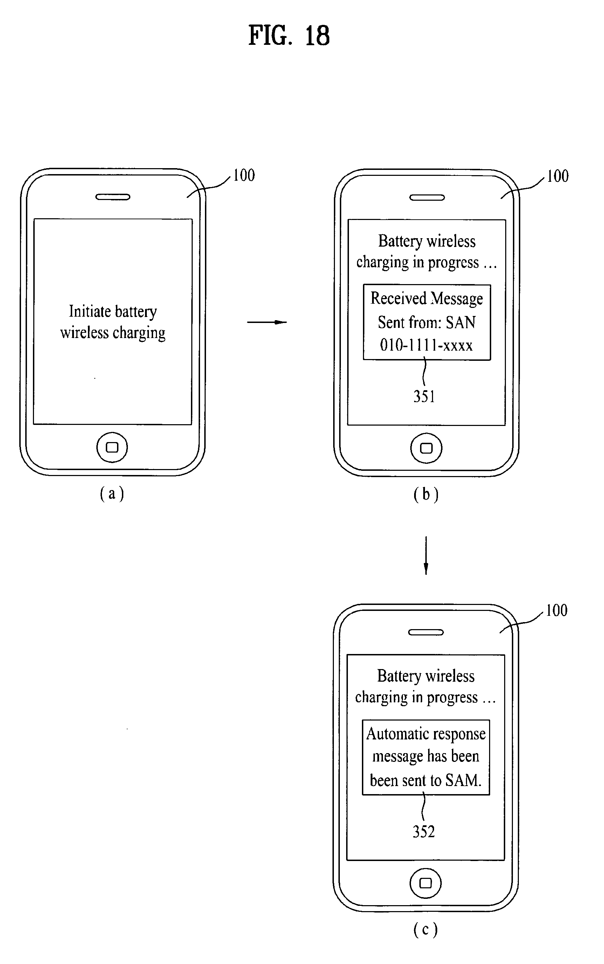

In the following description, an embodiment 1-3 of the present invention is explained in detail with reference to FIG. 17 and FIG. 18.

FIG. 17 and FIG. 18 are diagrams of screen configuration of a process for controlling an operation of a function set for a current location of a mobile terminal and/or a current time zone in case of a wireless charging of the mobile terminal according to an embodiment 1-3 of the present invention.

First of all, referring to FIG. 17 (a), for example, if a wireless charging of the battery 190 is initiated, the controller 180 of the mobile terminal 100 detects whether an event 341 of a call reception from an external terminal via the wireless communication unit 110 occurs.

Referring to FIG. 17 (b), if the occurrence of the call reception event 341 from the external terminal is detected, the controller 180 obtains a current location and/or a current time zone of the mobile terminal 100.

Subsequently, the controller 180 executes a response function mapped to the obtained current location and/or the obtained current time zone and then transmits response speech data 342 to the external terminal via the wireless communication unit 110 in response to the call [FIG. 17 (c)].

In this case, the response speech data 342 includes data of pre-recorded speech of a user or data previously selected by a user from a plurality of response speech data previously provided to the memory 160. For instance, the response speech data can include such a speech as 'A battery is being recharged. I'll call you back after completion of the charging.', 'Meeting in progress.', 'Currently absent', 'Unable to answer the call now.', 'Currently on vacation. I'll call you back later.', and the like.

Before the response speech data 342 is transmitted to the external terminal, the controller 180 displays a popup window for inquiring a user whether to transmit the response speech data 342. In accordance with a result inputted via the popup window, the controller 180 is able to determine whether to transmit the response speech data 342.

Thus, if the call reception event 341 occurs in the course of the wireless charging of the battery 190, the response speech data 342 is transmitted to the external terminal in accordance with a preset location and time zone of the mobile terminal. This is because of the following reason. First of all, since a user may be absent around the mobile terminal 100 in the course of charging the battery 190 by wireless, the external terminal can be informed of the situation that the user is unable to answer the call.

Meanwhile, referring to FIG. 18 (a), for example, if a wireless charging of the battery 190 is initiated, the controller 180 of the mobile terminal 100 detects whether an event 351 of a message reception from an external terminal via the wireless communication unit 110 occurs.

In this case, the message can include one of an SMS (short message service) message, an MMS (multimedia message service) message, an email, an SNS (social network service) message, a chatting instant message (IM) and the like.

Referring to FIG. 18 (b), if the occurrence of the message reception event 351 from the external terminal is detected, the controller 180 obtains a current location and/or a current time zone of the mobile terminal 100.

Subsequently, the controller 180 executes a response function mapped to the obtained current location and/or the obtained current time zone and then transmits a response message 352 to the external terminal via the wireless communication unit 110 in response to the message reception [FIG. 18 (c)].

In this case, the response message includes a stored message directly written by a user or a message previously selected by a user from a plurality of messages previously provided to the memory 160. For instance, the response message can include such a text as'A battery is being recharged. I'll call you back after completion of the charging.', 'Meeting in progress.', 'Currently absent', 'Unable to answer the call now.', 'Currently on vacation. I'll call you back later.', and the like.

Before the response message 352 is transmitted to the external terminal, the controller 180 displays a popup window for inquiring a user whether to transmit the response message 352. In accordance with a result inputted via the popup window, the controller 180 is able to determine whether to transmit the response message 352.

Thus, if the message reception event 351 occurs in the course of the wireless charging of the battery 190, the response message 352 is transmitted to the external terminal in accordance with a preset location and time zone of the mobile terminal. This is because of the following reason. First of all, since a user may be absent around the mobile terminal 100 in the course of charging the battery 190 by wireless, the external terminal can be informed of the situation that the user is unable to make a response.

### Embodiment 1-4

According to an embodiment 1-4 of the present invention, if a wireless charging of the mobile terminal 100 is initiated, a function, which is set for a current location of the mobile terminal 100 and/or a current time zone, is a content executing function.

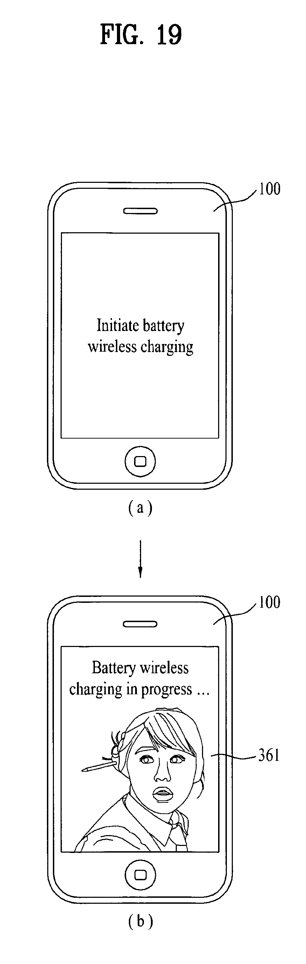

In the following description, an embodiment 1-4 of the present invention is explained in detail with reference to FIGs. 19 to 22.

FIGs. 19 to 22 are diagrams of screen configuration of a process for controlling an operation of a function set for a current location of a mobile terminal and/or a current time zone in case of a wireless charging of the mobile terminal according to an embodiment 1-4 of the present invention.

First of all, referring to FIG. 19 (a), if an initiation of a wireless charging of the battery 190 of the mobile terminal 100 is detected, the controller 180 obtains a current location and/or a current time zone of the mobile terminal 100, executes a content 361 mapped to the obtained current location and/or time zone in the memory 160, and then displays an executed screen of the content 361. [FIG. 19 (b)].

In this case, the content 361 is set by a user among a plurality of contents provided to the memory 160. Alternatively, the content 361 is generated and stored in the memory 160 for a preset period of time with reference to a current hour. Alternatively, the content 361 is obtained and stored in the memory 160 for a preset period of time with reference to a current hour.

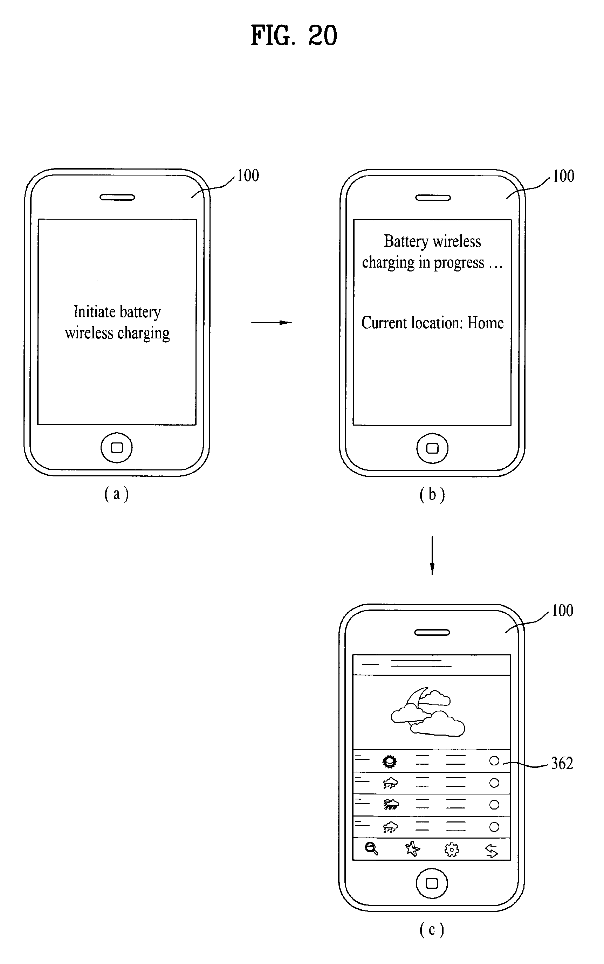

If an initiation of a wireless charging of the battery 190 of the mobile terminal 100 is detected [FIG. 20 (a)], the controller 180 detects whether a current location of the mobile terminal 100 is the location corresponding to a preset home [FIG. 20 (b)].

If the current location of the mobile terminal 100 is the location corresponding to the preset home, the controller 180 executes a content 362 mapped to the home location in the memory 160 [FIG. 20 (c)]. In this case, FIG. 20 (c) shows one example that the content 362 is a weather forecasting application.

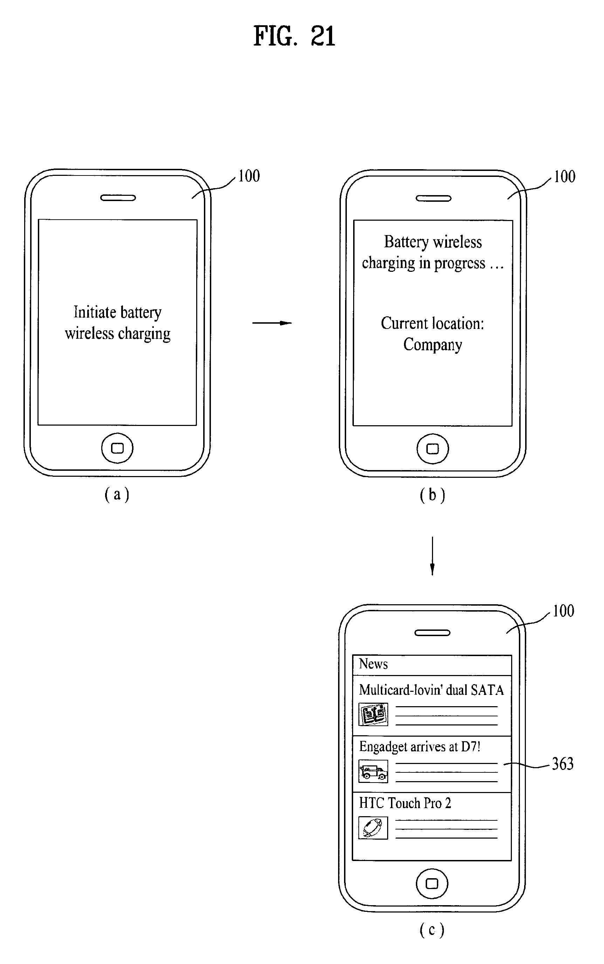

If an initiation of a wireless charging of the battery 190 of the mobile terminal 100 is detected [FIG. 21 (a)], the controller 180 detects whether a current location of the mobile terminal 100 is the location corresponding to a preset company [FIG. 21 (b)].

If the current location of the mobile terminal 100 is the location corresponding to the preset company, the controller 180 executes a content 363 mapped to the company location in the memory 160 [FIG. 21 (c)]. In this case, FIG. 21 (c) shows one example that the content 363 is a news application.

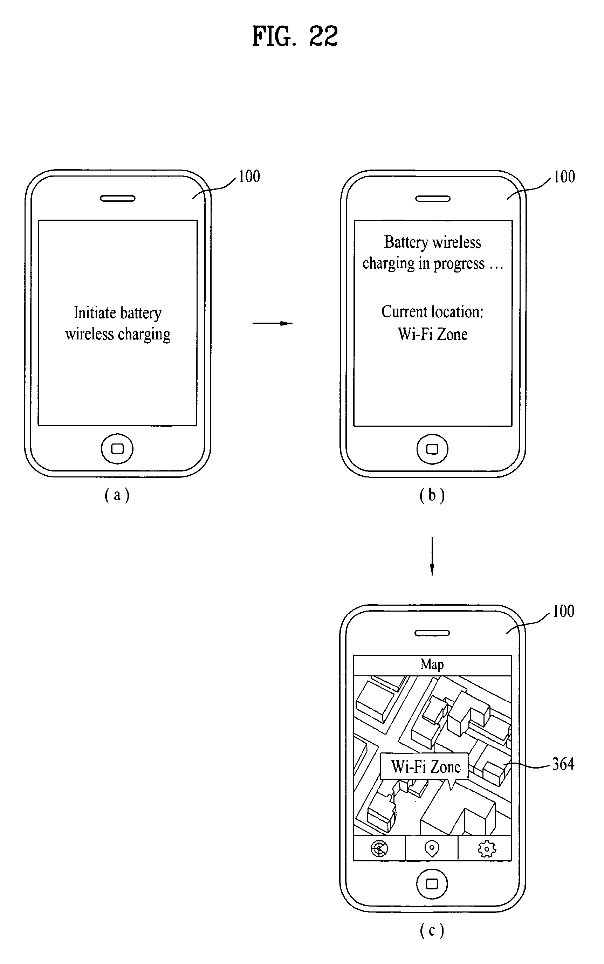

If an initiation of a wireless charging of the battery 190 of the mobile terminal 100 is detected [FIG. 22 (a)], the controller 180 detects whether a current location of the mobile terminal 100 is the location corresponding to a Wi-Fi zone [FIG. 21 (b)].

If the current location of the mobile terminal 100 is the location corresponding to the Wi-Fi zone, the controller 180 executes a content 364 mapped to the Wi-Fi zone in the memory 160 [FIG. 22 (c)]. In this case, FIG. 22 (c) shows one example that the content 362 indicates an internet service function free of charge.

As mentioned in the above description with reference to FIGs. 19 to 22, a user sets a content, which is to be executed in case of a wireless charging of the mobile terminal 100, and a place and/or time zone for executing the content, thereby being able to use the content optimized for a current place and/or a current time zone in the course of the wireless charging of the mobile terminal 100.

### Embodiment 1-5

According to an embodiment 1-5 of the present invention, if a wireless charging of the mobile terminal 100 is initiated, a function, which is set for a current location of the mobile terminal 100 and/or a current time zone, is a function of displaying an information on a charging status for the wireless charging medium 200.

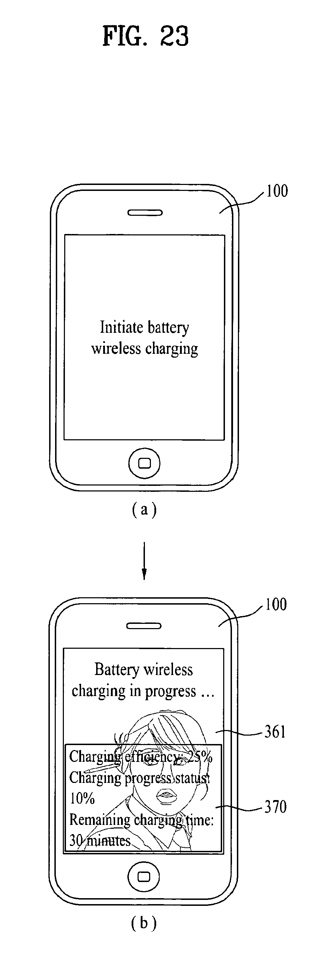

In the following description, an embodiment 1-5 of the present invention is explained in detail with reference to FIG. 23.

FIG. 23 is a diagram of screen configuration of a process for controlling an operation of a function set for a current location of a mobile terminal and/or a current time zone in case of a wireless charging of the mobile terminal according to an embodiment 1-5 of the present invention.

Referring to FIG. 23, if an initiation of a wireless charging of the battery 190 of the mobile terminal 100 is detected [FIG. 23 (a)], the controller 180 obtains a current location and/or a current time zone of the mobile terminal 100 and then displays a charging status information 370 mapped to the obtained current location and/or time zone in the memory 160. [FIG. 23 (b)].

In particular, after the current location and/or the current time zone has been obtained, if the function set for the obtained current location and/or the obtained current time zone is a function of displaying the charging status information 370, the controller 180 checks a charging status of the battery 190 for the wireless charging medium 200. In this case, the charged status can include at least one of a charging progress status of the battery 190, a charging efficiency and a remaining charging time.

Subsequently, the controller 180 displays the information 370 indicating the checked charging status.

In doing so, the controller 180 displays the specific content 362 described in the aforesaid embodiment 1-4 as a background screen of the display unit 151 and is able to display the information 370 indicating the charging status in a manner of overlaying the background screen with the information 370.

Besides, the controller 180 is able to output a speech for the information 370 indicating the charging status [not shown in the drawing].

### Embodiment 1-6

According to an embodiment 1-6 of the present invention, if a wireless charging of the mobile terminal 100 is initiated, a function, which is set for a current location of the mobile terminal 100 and/or a current time zone, is a function of transmitting a preset content to an external device situated around the mobile terminal 100.

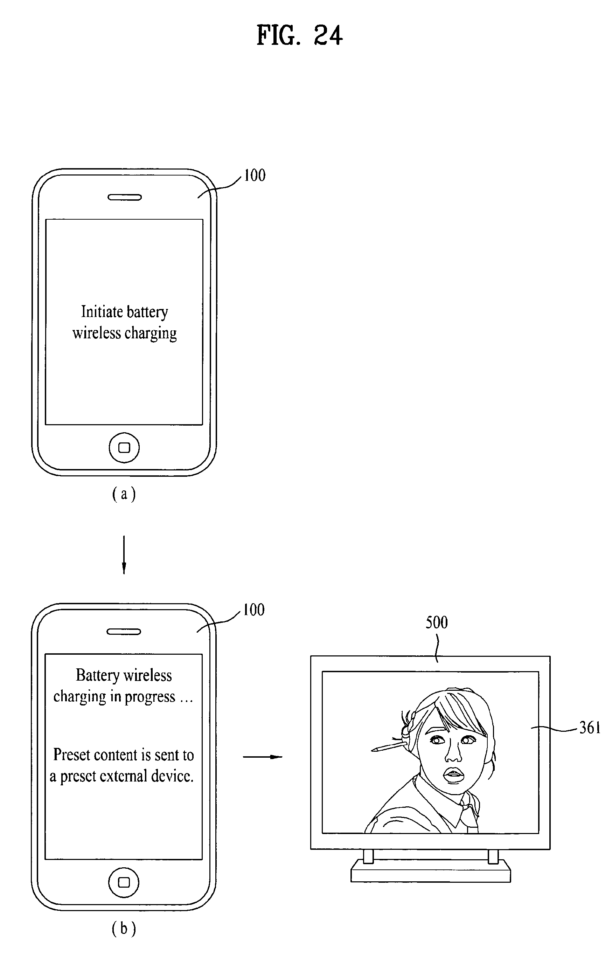

In the following description, an embodiment 1-5 of the present invention is explained in detail with reference to FIG. 24.

FIG. 24 is a diagram of screen configuration of a process for controlling an operation of a function set for a current location of a mobile terminal and/or a current time zone in case of a wireless charging of the mobile terminal according to an embodiment 1-6 of the present invention.

Referring to FIG. 24, if an initiation of a wireless charging of the battery 190 of the mobile terminal 100 is detected [FIG. 24 (a)], the controller 180 obtains a current location and/or a current time zone of the mobile terminal 100 and then executes a content transmitting function mapped to the obtained current location and/or time zone in the memory 160. [FIG. 24 (b)].

In this case, the content transmitting function means a function of transmitting a specific content 371 set by a user to at last one user-set external device 500 situated in the vicinity of the mobile terminal 100.

In particular, in order for the external device 500 to execute and display the content 371, the controller 180 transmits the content 371 to the external device 500 via the wireless communication unit 110.

In case that the external device 500 includes a home appliance situated within a user's home, the mobile terminal 100 preferably transmits the content 371 to the external device 500 using such a short range communication as Bluetooth and the like.

In case that at least two external devices 500 exist, the controller 180 makes a request for a corresponding device information to each of the at least two external devices 500 via the wireless communication unit 110.

If the device informations are received from the external devices via the wireless communication unit 110, the controller 180 searches for an external device capable of executing the content 361 based on the received device informations. The controller 180 then transmits the content 361 to the found external device.

When the content 361 is transmitted to the external device 500, the controller 180 transmits data of the content 361 or is able to transmit a frame corresponding to an executed screen of the content 361 to the external device 500 by real time.

In particular, the controller 500 receives the device information of the external device 500 and then determines whether the external device 500 is able to execute the content 361 based on the received device information.

If the external device 500 is able to execute the content 361, the controller 180 transmits the data of the content 361 to the external device 500.

On the contrary, if the external device 500 is not able to execute the content 361, the controller 180 controls the content 361 to be executed in the mobile terminal 100 and transmits a frame corresponding to an executed screen of the content 361 to the external device 500 by real time. In doing so, the controller 180 may display the executed screen of the content executed in the mobile terminal 100 on the display unit 151 or may not.

As mentioned in the foregoing description of the embodiment 1-4, the content 361 is previously set by a user or can be generated or obtained for a previously set period of time with reference to a current hour.

### Embodiment 1-7

According to an embodiment 1-7 of the present invention, if a wireless charging of the mobile terminal 100 is initiated, a function, which is set for a current location of the mobile terminal 100 and/or a current time zone, is a first remote UI (user interface) display function for an command for operating an external device situated in the vicinity of the mobile terminal 100.

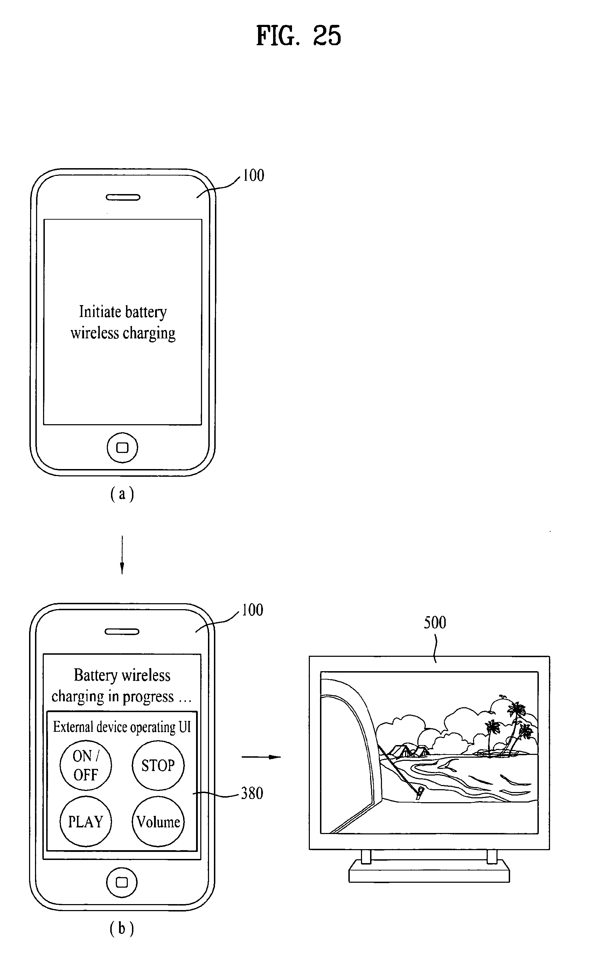

In the following description, an embodiment 1-7 of the present invention is explained in detail with reference to FIG. 25.

FIG. 25 is a diagram of screen configuration of a process for controlling an operation of a function set for a current location of a mobile terminal and/or a current time zone in case of a wireless charging of the mobile terminal according to an embodiment 1-7 of the present invention.

Referring to FIG. 25, if an initiation of a wireless charging of the battery 190 of the mobile terminal 100 is detected [FIG. 25 (a)], the controller 180 obtains a current location and/or a current time zone of the mobile terminal 100 and then executes an operating command function of an external device 500 mapped to the obtained current location and/or time zone in the memory 160. [FIG. 25 (b)].

In this case, the external device operating command function means a function of displaying a first remote UI 380 for commanding an operation of at least one user-set external device 500, which is situated in the vicinity of the mobile terminal 100, on the display unit 151.

For instance, if the external device 500 is TV, the first remote UI 380 can be configured in the same manner of command keys provided to a real remote controller of the TV.

For example, referring to FIG. 25 (b), the first remote UI 380 contains a first key for commanding a power-on/off of the external device 500, a second key for commanding a content play in the external device, a third key for commanding a stop of a content played in the external device 500, and a fourth key for commanding a volume-up/down of a content in the course of being played in the external device 500.

If a key for commanding a specific operation to the external device 500 in the first remote UI 380 is inputted, the controller 180 transmits a signal for commanding the operation execution to the external device 500 to perform the operation corresponding to the inputted key.

### Embodiment 1-8

According to an embodiment 1-8 of the present invention, if a wireless charging of the mobile terminal 100 is initiated, a function, which is set for a current location of the mobile terminal 100 and/or a current time zone, is a function of transmitting an executed screen frame of a preset content 361 to a preset external device 500 and displaying a second remote UI 390 for an operating command of the content that is being executed.

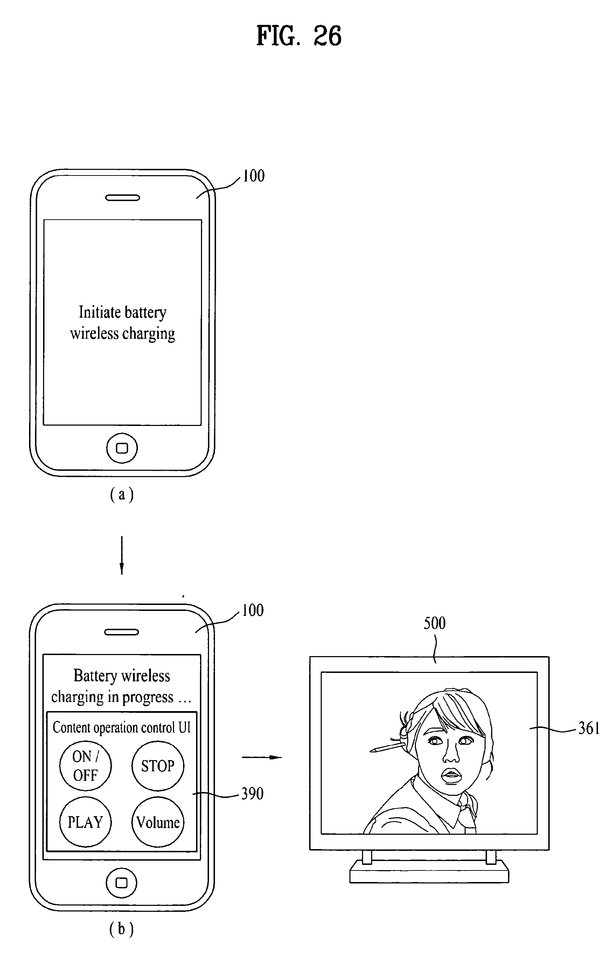

In the following description, an embodiment 1-4 of the present invention is explained in detail with reference to FIG. 26.

FIG. 26 is a diagram of screen configuration of a process for controlling an operation of a function set for a current location of a mobile terminal and/or a current time zone in case of a wireless charging of the mobile terminal according to an embodiment 1-8 of the present invention.

Referring to FIG. 26, if an initiation of a wireless charging of the battery 190 of the mobile terminal 100 is detected [FIG. 26 (a)], the controller 180 obtains a current location and/or a current time zone of the mobile terminal 100, executes a content 361 mapped to the obtained current location and/or time zone in the memory 160, transmits a frame corresponding to an executed screen of the content 361 to a preset external device 500, and displays a second remote UI 390 for an operating command of the executed content 361 on the display unit 151. [FIG. 26 (b)].

In particular, if the wireless charging is initiated, the mobile terminal 100 transmits an executed screen of a content preset in a current time zone to the preset external device 500 to display the executed screen. And, the second remote UI 390 for the operating command of the content played in the external device 500 is displayed on the mobile terminal 100.

Namely, while the mobile terminal 100 is charged by wireless, a user of the mobile terminal 100 watches an executed screen of the content 361 on the mobile terminal 100 via the external device 500 and is also able to manipulate an operation of the content 361 via the mobile terminal 100.

For instance, if the content 361 is multimedia, the second remote UI 390 can include keys for operating commands related to the playback of the multimedia.

If a key for controlling a specific operation in the second remote UI 390 is inputted, the controller 180 controls an operation of the executed content 361 to correspond to the inputted operation control key and transmits an executed screen frame of the content 361 reflecting the operation control to the external device 500 b real time.

### Embodiment 1-9

According to an embodiment 1-9 of the present invention, if a wireless charging of the mobile terminal 100 is initiated, a function, which is set for a current location of the mobile terminal 100 and/or a current time zone, is a function of initiating a prepared, interrupted or reserved update of software.

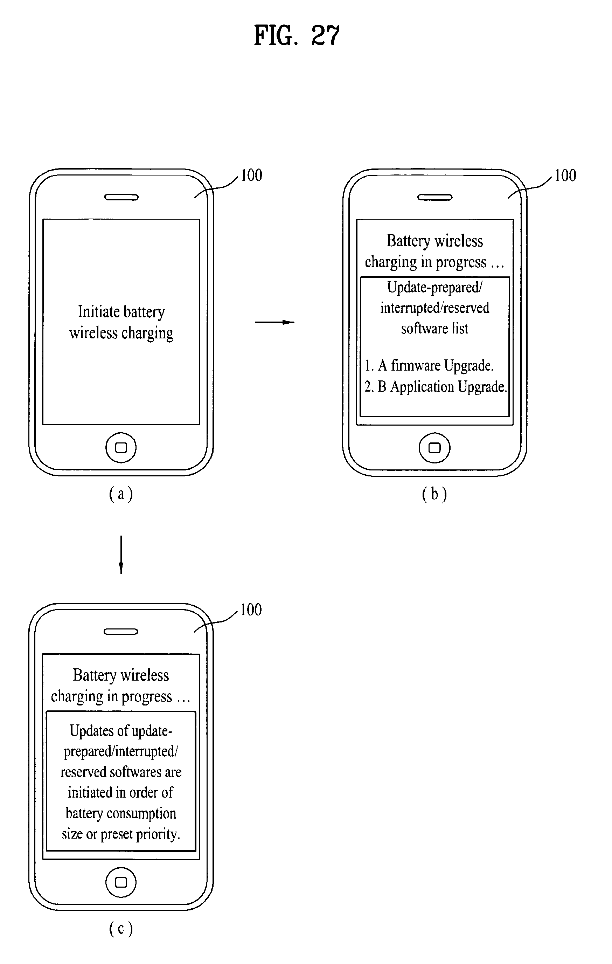

In the following description, an embodiment 1-9 of the present invention is explained in detail with reference to FIG. 27.

FIG. 27 is a diagram of screen configuration of a process for controlling an operation of a function set for a current location of a mobile terminal and/or a current time zone in case of a wireless charging of the mobile terminal according to an embodiment 1-9 of the present invention.

Referring to FIG. 27, if an initiation of a wireless charging of the battery 190 of the mobile terminal 100 is detected [FIG. 27 (a)], the controller 180 obtains a current location and/or a current time zone of the mobile terminal 100 and then executes a software update function mapped to the obtained current location and/or time zone in the memory 160. [FIG. 26 (b), FIG. 27 (c)].

In this case, the software includes one of an application, a firmware, an operating system (OS), a driver, a content, a multimedia data and the like, which are provided to the mobile terminal 100.

The update of the software is already prepared or reserved before the battery 190 of the mobile terminal 100 is charged by wireless.

And, the update of the software can be interrupted due to a low voltage state of the battery 190 despite that the update is already prepared or reserved.

Referring to FIG. 27 (b), if the wireless charging of the battery 190 is initiated, the controller 180 displays an update list 401 of the prepared, interrupted or reserved softwares. If a specific software is selected from the update list 401, the controller 180 initiates the update of the selected software. In particular, while the battery 190 is being charged by wires, a user selects a desired software from the update list 401 and is then able to initiate the update of the selected software.

Referring to FIG. 27 (c), if the wireless charging of the battery 190 is initiated, the controller 180 recognizes the softwares, each of which update is prepared, interrupted or reserved, and is then able to execute the updates of the recognized softwares in order of a size of power consumption of the battery 190.

And, the controller 180 is able to execute the updates of the recognized softwares based on a preset priority or a use frequency rank.

### Embodiment 1-10

According to an embodiment 1-10 of the present invention, in case that the wireless charging medium 200 is the wireless charging pad 200A, if a wireless charging of the mobile terminal 100 is initiated, a function, which is set for a current location of the mobile terminal 100 and/or a current time zone, is a function of guiding a charging with the wireless charging pad 200A.

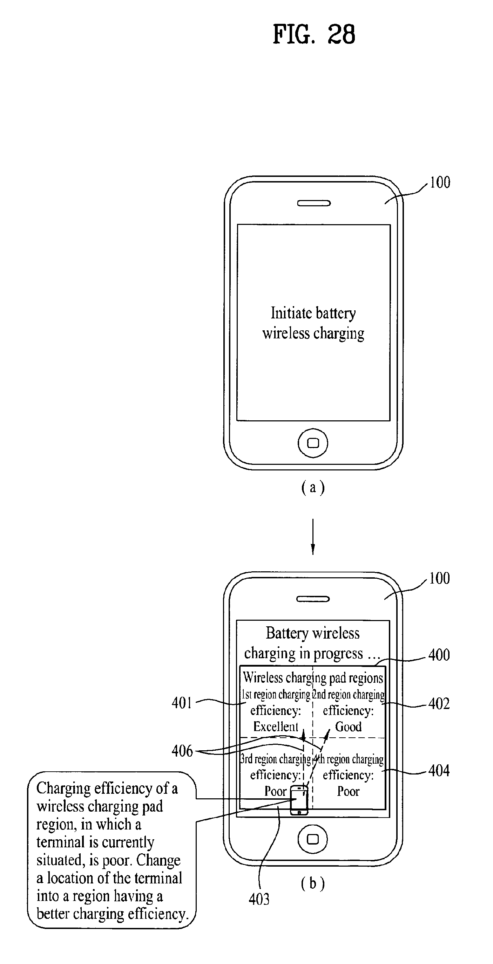

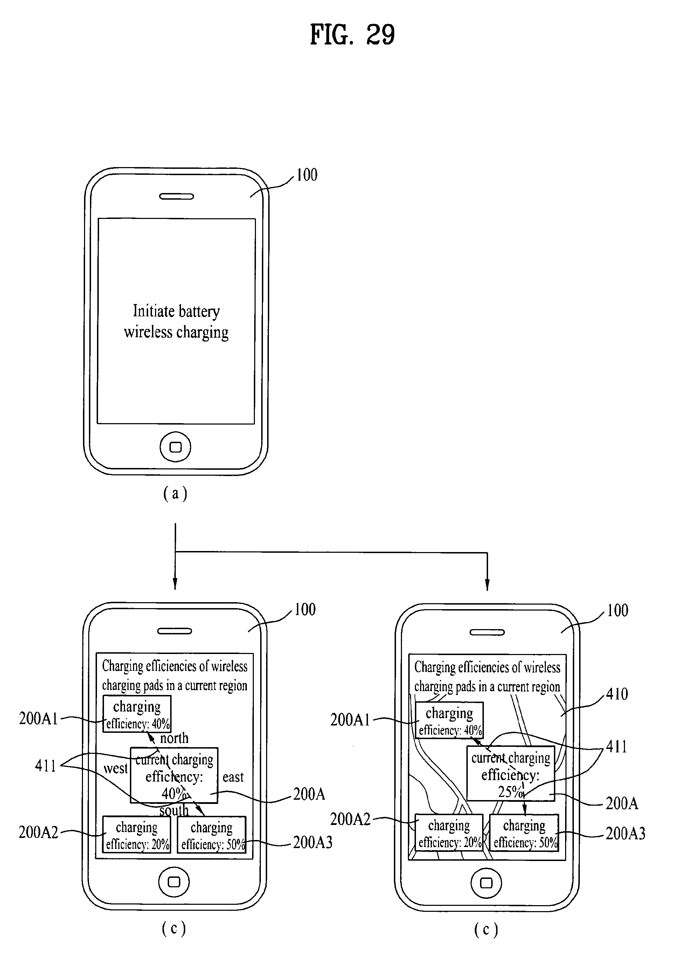

In the following description, an embodiment 1-10 of the present invention is explained in detail with reference to FIG. 28 and FIG. 29.

FIG. 28 and FIG. 29 are diagrams of screen configuration of a process for controlling an operation of a function set for a current location of a mobile terminal and/or a current time zone in case of a wireless charging of the mobile terminal according to an embodiment 1-10 of the present invention.

First of all, each time a wireless charging is performed via the wireless charging pad 200A, the controller 180 obtains an identification information of the wireless charging pad 200A, a location information of a charging region paired with the mobile terminal 100 among charging regions within the wireless charging pad 200A, and a charging efficiency information of the paired charging region, maps the obtained identification information, location information and charging efficiency information together, and then stores the corresponding mapping information as a table in the memory 160.

In particular, each time the wireless charging is performed with each of the charging regions in the wireless charging pad 200A, the controller 180 updates the identification information of the wireless charging pad 200A, the location information of the charging regions and the charging efficiency information on the charging regions in the table provided to the memory 160.

Subsequently, as the mobile terminal 100 is placed on the wireless charging pad 200A, if the controller 180 detects that the wireless charging is initiated [FIG. 28 (a)], the controller 180 obtains a current location and/or a current time zone of the mobile terminal 100 and then executes a charging guide function mapped to the obtained current location and/or the obtained current time zone in the memory 160 [FIG. 26 (b), FIG. 26 (c)].

Referring to FIG. 28 (b) and the former description with reference to FIG. 3, the wireless charging pad 200A includes at least two charging regions and coils are provided to the charging regions, respectively.

As the mobile terminal 100 is placed on the wireless charging pad 200A, if the wireless charging is initiated, the wireless charging pad 200A transmits the location information of the charging region paired with the mobile terminal 100 and its identification information to the mobile terminal 100.

The controller 180 searches for the charging efficiency informations of the charging regions 301 to 304 mapped to the received identification information of the wireless charging pad 200A and then displays the found charging efficiency information on each of the charging regions 301 to 304 of the wireless charging pad 200A.

In particular, referring to FIG. 28 (b), if the wireless charging with the wireless charging pad 200A is initiated, the controller 180 displays an image 400 representing a shape of the wireless charging pad 200A including the charging regions 401 to 404 and then controls an information, which indicates a charging efficiency on each of the charging regions 401 to 404, to be displayed within the image 400.

For instance, FIG. 28 (b) shows that the mobile terminal 100 is situated in the third charging region 403 having a poor charging efficiency.

In doing so, if the charging region 403 having the mobile terminal 100 situated therein has a poor charging efficiency, the controller 180 is able to display an information 406 for guiding a location shift of the mobile terminal to another charging region 401 or 402 having a good charging efficiency.

In particular, a user is able to recognize that a charging efficiency of the mobile terminal 100 in the course of the wireless charging is currently good on a specific charging region 403 of the wireless charging pad 200A. If a charging efficiency of the charging region 403, in which a charging is in progress, is poor, a user is able to move the mobile terminal 100 to another charging region 401 or 402 having a good charging efficiency to perform the wireless charging more quickly.

Referring to FIG. 29, each time a wireless charging is performed with wireless charging pads situated in the vicinity of the mobile terminal 100, the controller 180 obtains locations of the wireless charging pads via the position location module 115, maps an identification information, a location information and a charging efficiency information of each of the wireless charging pads together, and then stores the corresponding mapping information as a table in the memory 160.

In this case, the charging efficiency information can include an average value of charging efficiencies of all charging regions within a corresponding wireless charging pad or a charging efficiency value of a prescribed one of the charging regions.

Meanwhile, since each of the wireless charging pads in the course of performing the wireless charging on the mobile terminal 100 is situated in the very vicinity of the mobile terminal 100, a current location of the mobile terminal 100 can approximately correspond to a location of each of the wireless charging pads.

Referring to FIG. 29, if an initiation of a wireless charging of the mobile terminal 100 with a specific wireless charging pad 200A is detected [FIG. 29 (a)], the controller 180 obtains a current location and/or a current time zone of the mobile terminal 100 and then executes a charging guide function mapped to the obtained current location and/or time zone in the memory 160. [FIG. 29 (b), FIG. 29 (c)].

In particular, the controller 180 obtains a current region, at which the mobile terminal 100 is situated, via the position location module 115 and then searches the memory 160 for the wireless charging pads 200A ∼ 200A3 situated within the current region of the mobile terminal 100 based on the location informations of the wireless charging pads stored in the memory 160.

Subsequently, the controller 180 searches the memory 160 for the charging efficiency informations mapped to the found wireless charging pads 200A ∼ 200A3.

The controller 180 then displays the charging efficiency informations of the found wireless charging pads 200A ∼ 200A3 [FIG. 29 (b), FIG. 29 (c)].

In doing so, referring to FIG. 29 (b), the controller 180 is able to display locations (directions and distances) of the wireless charging pads 200A ∼ 200A3 situated in the current region of the mobile terminal 100 and the charging efficiency informations of the wireless charging pads 200A ∼ 200A3 with reference to the location of the wireless charging pad 200A in the course of the wireless charging of the mobile terminal 100 on the screen of the display unit 151.

Referring to FIG. 29 (c), the controller 180 searches the map data provided to the memory 160 for a map 410B corresponding to the region having the mobile terminal 100 situated therein and then displays the found map 410B. And, the controller 180 is able to display the location of the wireless charging pad 200A in the course of the wireless charging of the mobile terminal 100, locations (directions and distances) of the wireless charging pads 200A ∼ 200A3 situated in the current region of the mobile terminal 100 and the charging efficiency informations of the wireless charging pads 200A ∼ 200A3 on the map 410B.

If the charging efficiency of the wireless charging pad 200A in the course of the wireless charging of the mobile terminal 100 is not good, referring to FIG. 29 (b) and FIG. 29 (c), the controller 180 is able to display an information 411 for guiding a wireless charging with another wireless charging pad 200A1 or 200A3 having a good charging efficiency.

In particular, a user is aware of the charging efficiency of the wireless charging pad 200A in the course of the wireless charging of the mobile terminal 100 and is also aware of the charging efficiencies of the wireless charging pads 200A ∼ 200A3 in the current region in which the mobile terminal 100 is situated. If the charging efficiency of the wireless charging pad 200A in the course of the wireless charging is not good, the wireless charging with the wireless charging pad 200A is terminated and a wireless charging can be performed with another wireless charging pad 200A1 or 200A3 having a good charging efficiency.

### Embodiment 1-11

According to an embodiment 1-10 of the present invention, in case that the wireless charging medium 200 is the wireless charging pad 200B, if a wireless charging of the mobile terminal 100 is initiated, a function, which is set for a current location of the mobile terminal 100 and/or a current time zone, is a function of guiding a charging with the wireless charging pad 200B.

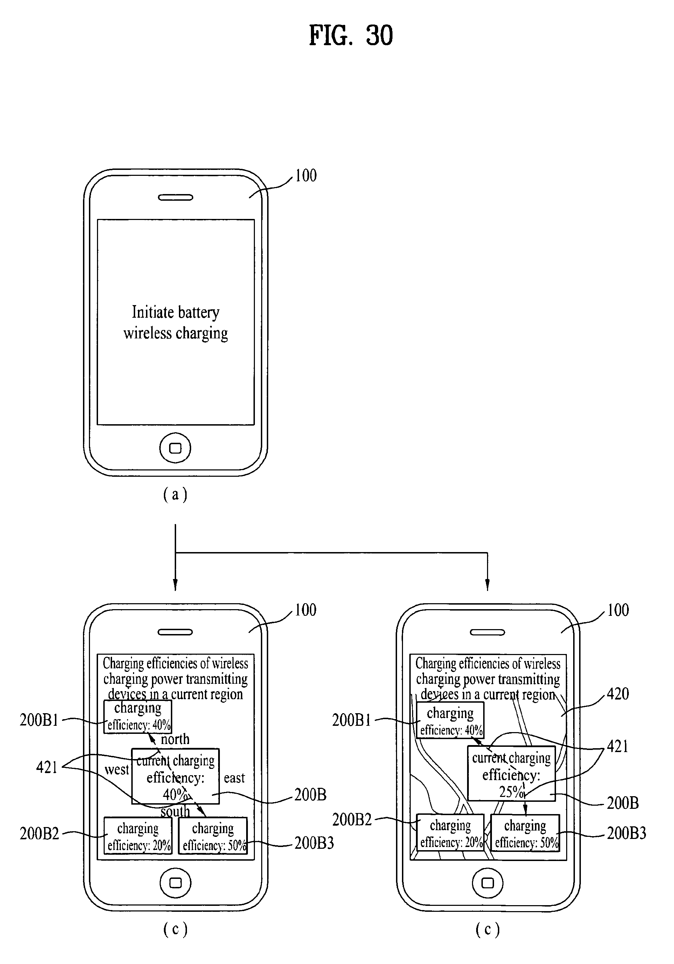

In the following description, an embodiment 1-11 of the present invention is explained in detail with reference to FIG. 30.

FIG. 30 is a diagram of screen configuration of a process for controlling an operation of a function set for a current location of a mobile terminal and/or a current time zone in case of a wireless charging of the mobile terminal according to an embodiment 1-11 of the present invention.

First of all, each time a wireless charging is performed via the wireless charging power transmitting devices situated in the vicinity of the mobile terminal 100, the controller 180 obtains locations of the wireless charging power transmitting devices via the position location module 115, maps an identification information, a location information and a charging efficiency information of each of the wireless charging power transmitting devices together, and then stores the corresponding mapping information as a table in the memory 160.

In this case, since each of the wireless charging power transmitting devices in the course of the wireless charging of the mobile terminal 100 is situated in the vicinity of the mobile terminal 100, a current location of the mobile terminal 100 can become a schematic location of each of the wireless charging power transmitting devices.

In particular, each time the wireless charging is performed with each of the wireless charging power transmitting devices in a current region, the controller 180 updates the identification informations of the wireless charging power transmitting devices, the location informations of the wireless charging power transmitting devices and the charging efficiency information of the wireless charging power transmitting devices in the table provided to the memory 160.

Referring to FIG. 30, if an initiation of a wireless charging of the mobile terminal 100 with a specific wireless charging power transmitting device 200B is detected [FIG. 30 (a)], the controller 180 obtains a current location and/or a current time zone of the mobile terminal 100 and then executes a charging guide function mapped to the obtained current location and/or time zone in the memory 160. [FIG. 30 (b), FIG. 30 (c)].

In particular, the controller 180 obtains a current region, at which the mobile terminal 100 is situated, via the position location module 115 and then searches the memory 160 for the wireless charging power transmitting devices 200B ∼ 200B3 situated within the current region of the mobile terminal 100 based on the location informations of the wireless charging power transmitting devices stored in the memory 160.

Subsequently, the controller 180 searches the memory 160 for the charging efficiency informations mapped to the found wireless charging power transmitting devices 200B ∼ 200B3.

The controller 180 then displays the charging efficiency informations of the found wireless charging power transmitting devices 200B ∼ 200B3 [FIG. 30 (b), FIG. 30 (c)].

In doing so, referring to FIG. 30 (b), the controller 180 is able to display locations (directions and distances) of the wireless charging power transmitting devices 200B ∼ 200B3 situated in the current region of the mobile terminal 100 and the charging efficiency informations of the wireless charging power transmitting devices 200B ∼ 200B3 with reference to the location of the wireless charging power transmitting device 200B in the course of the wireless charging of the mobile terminal 100 on the screen 410A of the display unit 151.

Referring to FIG. 30 (c), the controller 180 searches the map data provided to the memory 160 for a map 410B corresponding to the region having the mobile terminal 100 situated therein and then displays the found map 410B. And, the controller 180 is able to display the location of the wireless charging power transmitting device 200B in the course of the wireless charging of the mobile terminal 100, locations (directions and distances) of the wireless charging power transmitting devices 200B ∼ 200B3 situated in the current region of the mobile terminal 100 and the charging efficiency informations of the wireless charging power transmitting devices 200B ∼ 200B3 on the map 410B.

If the charging efficiency of the wireless charging power transmitting device 200B in the course of the wireless charging of the mobile terminal 100 is not good, referring to FIG. 30 (b) and FIG. 30 (c), the controller 180 is able to display an information 431 for guiding a wireless charging with another wireless charging power transmitting device 20OB1 or 200B3 having a good charging efficiency.

In particular, a user is aware of the charging efficiency of the wireless charging power transmitting device 200B in the course of the wireless charging of the mobile terminal 100 and is also aware of the charging efficiencies of the wireless charging power transmitting devices 200B ∼ 200B3 in the current region in which the mobile terminal 100 is situated. If the charging efficiency of the wireless charging power transmitting device 200B in the course of the wireless charging is not good, the wireless charging with the wireless charging power transmitting device 200B is terminated and a wireless charging can be performed with another wireless charging power transmitting device 20OB1 or 200B3 having a good charging efficiency.

In the foregoing description with reference to FIGs. 8 to 30, if a wireless charging of the battery 190 of the mobile terminal is initiated via the wireless charging medium 200, a process for executing a function preset at a location of the mobile terminal 100 and/or a function preset in a preset time zone is explained in detail.

In the following description of a second embodiment of the present invention, if the mobile terminal 100 intends to initiate a wireless charging with a specific wireless charging medium within a current region, a process for providing a user with information on charging efficiencies of wireless charging media situated within the current region is explained in detail.

### Second Embodiment

A second embodiment of the present invention relates to a process for providing charging efficiency information of wireless charging media included in a current region of the mobile terminal 100 if a command for a wireless charging initiation of the battery 190 or a command for searching for the wireless charging media situated in the current region is inputted.

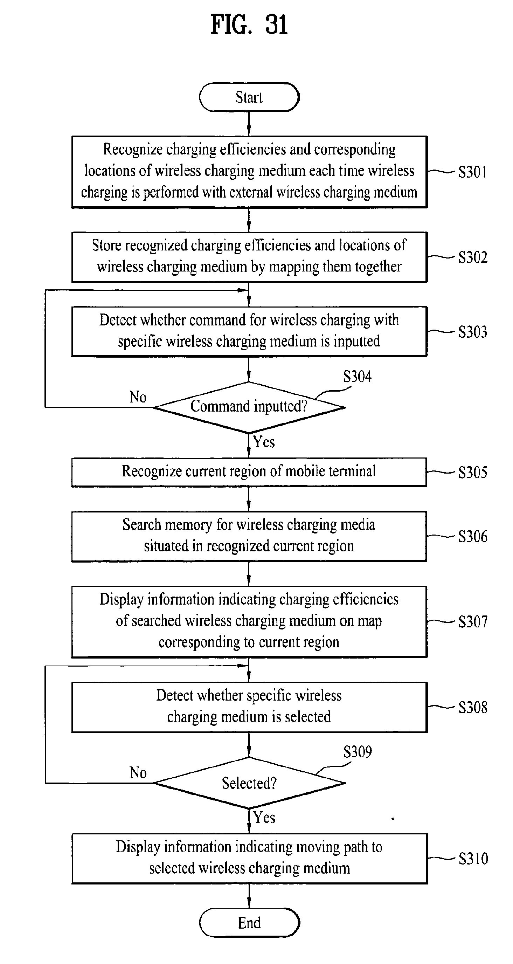

In the following description, a second embodiment of the present invention is explained in detail with reference to FIG. 31.

FIG. 31 is a flowchart of a process for providing charging efficiency information on wireless charging media within a current area in case of a wireless charging of a mobile terminal according to a second embodiment of the present invention.

Referring to FIG. 31, each time a wireless charging is performed with each of external wireless charging media, the controller 180 obtains an identification information, a corresponding location and a corresponding charging efficiency information of each of the wireless charging media [S301], maps the obtained identification information, corresponding location and corresponding charging efficiency information of each of the wireless charging media together, and then stores the mapping information as a table in the memory 160 [S302].

In doing so, as mentioned in the foregoing description with reference to FIG. 29, in case that the wireless charging medium 200 is the wireless charging pad 200A, each time a wireless charging with the wireless charging pads situated in the vicinity of the mobile terminal 100 is performed, the controller 180 obtains locations of the wireless charging pads via the position location module 115, maps the identification information, the location information and the charging efficiency information of each of the wireless charging pads together, and then stores the mapping information as a table in the memory 160. In this case, the charging efficiency information of each of the wireless charging pads can include an average value of charging efficiencies of all charging regions within the corresponding wireless charging pad or a charging efficiency value of a prescribed charging region.

Moreover, as mentioned in the foregoing description with reference to FIG. 30, in case that the wireless charging medium 200 is the wireless charging power transmitting device 200B, each time a wireless charging with the wireless charging power transmitting devices situated in the vicinity of the mobile terminal 100 is performed, the controller 180 obtains locations of the wireless charging power transmitting devices via the position location module 115, maps the identification information, the location information and the charging efficiency information of each of the wireless charging power transmitting devices together, and then stores the mapping information as a table in the memory 160.

Subsequently, the controller 180 detects whether a command for a wireless charging with a specific wireless charging medium 200 or a search command for wireless charging media situated in a current region is inputted from a user [S303].

If the command is detected [S304], the controller 180 obtains a current region in which the mobile terminal 100 is situated via the position location module 115 [S305].

Based on the locations of the wireless charging media stored in the memory 160, the controller 180 searches for the wireless charging media situated in the obtained current region of the mobile terminal 100 [S306].

Subsequently, the controller 180 searches the memory 160 for the charging efficiency informations mapped to the found wireless charging media again and then displays the found charging efficiency informations of the wireless charging media [S307].

In doing so, if the wireless charging media include the wireless charging pads, the controller 180 is able to display the locations (directions and distances) of the found wireless charging pads and the corresponding charging efficiency informations with reference to the current location of the mobile terminal 100 in a manner similar to that of the former description with reference to FIG. 29 (b).

If the wireless charging media include the wireless charging pads, the controller 180 searches map data provided to the memory 160 for a map corresponding to the region having the mobile terminal 100 situated therein and then displays the fund map. And, the controller is able to display the locations (directions and distances) of the found wireless charging pads and the corresponding charging efficiency informations with reference to the current location of the mobile terminal 100 on the displayed map in a manner similar to that of the former description with reference to FIG. 29 (c).

If the wireless charging media include the wireless charging power transmitting devices, the controller 180 is able to display the locations (directions and distances) of the found wireless charging power transmitting devices and the corresponding charging efficiency informations with reference to the current location of the mobile terminal 100 in a manner similar to that of the former description with reference to FIG. 30 (b).

If the wireless charging media include the wireless charging power transmitting devices, the controller 180 searches map data provided to the memory 160 for a map corresponding to the region having the mobile terminal 100 situated therein and then displays the fund map. And, the controller is able to display the locations (directions and distances) of the found wireless charging power transmitting devices and the corresponding charging efficiency informations with reference to the current location of the mobile terminal 100 on the displayed map in a manner similar to that of the former description with reference to FIG. 30 (c).

While the charging efficiency informations of the wireless charging media are displayed on the screen, the controller 180 detects whether a specific wireless charging medium or a charging efficiency information of the specific wireless charging medium is selected [S308].

If a specific wireless charging medium or a charging efficiency information of the specific wireless charging medium is selected [S309], the controller 180 obtains a moving path from the mobile terminal 100 to the selected wireless charging medium based on the map data provided to the memory 160, the current location of the mobile terminal 100 and the current location of the selected wireless charging medium and then displays an information indicating the obtained moving path on the screen [S310].

In this case, the moving path can include the distance and direction to the selected wireless charging medium with reference to the current location of the mobile terminal 100.

In particular, when a user intends to perform a wireless charging on the mobile terminal 100, the user is able to perform an optimal wireless charging in a manner of checking locations of wireless charging media situated in a current region and corresponding charging efficiencies and then finding the wireless charging medium having the best charging efficiency at the current location.

Besides, the second embodiment of the present invention can merge with the first embodiment of the present invention.

In particular, after completion of the steps S301 to S310 described with reference to FIG. 31, the step S121 of the first embodiment described with reference to FIG. 12 can be executed contiguously.

Accordingly, the present invention provides the following effects and/or advantages.

First of all, when a battery of a mobile terminal is charged via a wireless charging medium, the present invention provides a user with a function optimized for a current location of the mobile terminal.

Secondly, when a battery of a mobile terminal is charged via a wireless charging medium, the present invention provides a user with a function optimized for a current time zone.

Thirdly, the present invention provides charging efficiency information of wireless charging media within a current region, thereby enabling a user to charge a battery of a mobile terminal via a wireless charging medium having a good charging efficiency.

Finally, the present invention provides a moving path of a wireless charging medium selected by a user from a plurality of wireless charging media within a current region.

It will be apparent to those skilled in the art that various modifications and variations can be specified into other form(s) without departing from the spirit or scope of the inventions.

In addition, the above-described methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet). And, the computer can include the controller 180 of the terminal.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal, comprising:
a battery (190);
a display unit (151) configured to display information;
a wireless communication unit (110) configured to a wireless communication;
a position location unit (115) configured to recognize a location of a terminal;
a memory (160) having at least one function mapped to at least one location of the terminal;
a charging unit (192) configured to charge the battery by receiving a wireless charging power generated from an external wireless charging medium; and
a controller (180) configured to control an operation relating to wireless charging of the battery,
**characterized in that** the controller is configured to recognize a current location of the terminal via the position location unit when a wireless charging of the battery is initiated via the wireless charging medium, to search the memory for a function mapped to the recognized location of the terminal, and to control an operation relating to the searched function.

2. The mobile terminal of claim 1,
wherein the wireless charging medium generates the wireless charging power in accordance with one of magnetic induction and magnetic resonance.

3. The mobile terminal of any one of claims 1 or 2,
wherein at least one function is further mapped to at least one time zone in the memory, and
wherein the controller recognizes a current time zone when a wireless charging of the battery is initiated, searches the memory for a function mapped to the recognized time zone, and further controls an operation relating to the searched function.

4. The mobile terminal of any one of claims 1 to 3,
wherein the searched function is a use lock or a use unlock for functions loaded in the terminal entirely or in part, the controller locks or unlocks a use of the functions when the wireless charging of the battery is initiated, and/or
wherein the searched function is a touch lock or a touch unlock of a screen of the display unit, the controller locks or unlocks a touch to the screen of the display unit when the wireless charging of the battery is initiated.

5. The mobile terminal of any one of claims 1 to 3,
wherein the searched function is an automatic response function corresponding to at least one event, and the controller executes the automatic response function corresponding to an occurred event when the occurrence of the event is detected in the course of wireless charging the battery, and/or
wherein the searched function is a display function of information indicating an occurrence of a specific event, and the controller displays the information indicating an occurred event when the occurrence of the event is detected in the course of wireless charging the battery.

6. The mobile terminal of any one of claims 1 to 3,
wherein the searched function is a display function of information indicating at least one selected from the group consisting of a wireless charging progress status, a wireless charging efficiency and a remaining wireless charging time of the battery, and
wherein the controller displays the information when the wireless charging of the battery is initiated.

7. The mobile terminal of any one of claims 1 to 3,
wherein the searched function is an execution function of at least one preset content, and
wherein the controller executes the preset content when the wireless charging of the battery is initiated.

8. The mobile terminal of any one of claims 1 to 3,
wherein the searched function is an execution function of at least one content generated or obtained by the terminal for a preset period of time, and
wherein the controller searches the terminal for the at least one content generated or obtained for the preset period of time when the wireless charging of the battery is initiated, executes the searched at least one content and displays a corresponding executed screen on the display unit.

9. The mobile terminal of any one of claims 1 to 3,
wherein the searched function is a transmission function of a preset content to at least one preset external device situated in the vicinity of the terminal, and
wherein the controller controls the wireless communication unit to transmit the preset content to the external device in order for the external device to receive and execute the content.

10. The mobile terminal of claim 9,
wherein if at least two external devices exist, the controller receives a corresponding device information from each of the at least two external devices, searches the external devices for at least one external device available for an execution of the content based on the received device information, and transmits the content to the found at least one external device.

11. The mobile terminal of any one of claims 1 to 3,
wherein the searched function is a display function of a first user interface (hereinafter abbreviated UI) for an operation command for a preset external device situated in the vicinity of the terminal, and
wherein the controller displays the first UI when the wireless charging of the battery is initiated, transmits a signal corresponding to an inputted command to the external device in order for the external device to perform an operation corresponding to the inputted command if the command is inputted via the first UI.

12. The mobile terminal of any one of claims 1 to 3,
wherein the searched function is a second UI display function for an execution of a preset content, a transmission of a frame of a corresponding executed screen to a preset external device situated in the vicinity of the terminal and an operation command for the content, and
wherein the controller transmits an executed screen frame of the content to the external device by real time via the wireless communication unit when the wireless charging of the battery is initiated, then displays the second UI, applies an operation corresponding to an inputted command to the executed content if the command is inputted by the second UI, transmits the executed screen frame of the applied content to the external device.

13. The mobile terminal of any one of claims 1 to 3,
wherein the searched function is an update initiating function of at least one software of which update is prepared, interrupted or reserved, and
wherein the controller initiates the update of the at least one software when the wireless charging of the battery is initiated.

14. The mobile terminal of any one of claims 1 to 3,
wherein a corresponding charging efficiency information is further mapped to a location of each of at least two external wireless charging medium in the memory,
wherein the searched function is a display function of information indicating charging efficiencies of the wireless charging mediums within a region in which the terminal is situated, and
wherein the controller recognizes a current region including a preset radius in which the terminal is situated via the position location unit when the wireless charging of the battery is initiated, searches the memory for the wireless charging mediums situated within the recognized current region, and displays the information indicating the charging efficiencies of the searched wireless charging mediums.

15. A method of controlling a mobile terminal (100), the method comprising:
receiving (S121, S122), a wireless charging power from an external wireless charging medium (200);
initiating (S123), a wireless charging of a battery (190)of the mobile terminal using the received wireless charging power;
recognizing (S124), a current location of the mobile terminal when the wireless charging of the battery is initiated;
searching (S125), a memory (160) of the mobile terminal for a function preset to the recognized location of the terminal; and
controlling (S126), an operation relating to the searched function.
